# EUROPÄISCHE PATENTSCHRIFT

(11) **EP 4 430 437 B1**
(45) Veröffentlichungstag und Bekanntmachung des Hinweises auf die Patenterteilung: **02.09.2026**
(21) Anmeldenummer: 22805840.0
(22) Anmeldetag: 20.10.2022
(51) Int. Cl.: G02B 5/08, C03C 17/36, G02B 5/28, G02B 27/01, B32B 17/10, C03C 17/34

(54) **PROJEKTIONSANORDNUNG UMFASSEND EINE VERBUNDSCHEIBE**
PROJECTION ASSEMBLY COMPRISING A LAMINATED PANE
AGENCEMENT DE PROJECTION COMPRENANT UNE VITRE COMPOSITE

(30) Priorität: 12.11.2021 EP 21207872
(43) Veröffentlichungstag der Anmeldung: 18.09.2024
(73) Patentinhaber: Saint-Gobain Sekurit France, 60150 Thourotte (FR)
(72) Erfinder: HAGEN, Jan, 52134 Herzogenrath (DE)
(74) Vertreter: Gebauer, Dieter Edmund
(86) Internationale Anmeldenummer: PCT/EP2022/079207
(87) Internationale Veröffentlichungsnummer: WO 2023/083578

(56) Entgegenhaltungen:
- WO-A1-2021/209201
- CN-A- 113 071 165
- US-A1- 2017 242 247
- US-A1- 2018 149 867

## Beschreibung

Die Erfindung betrifft eine Projektionsanordnung umfassend eine Verbundscheibe, ein Verfahren zu deren Herstellung und deren Verwendung.

Moderne Automobile werden in zunehmendem Maße mit sogenannten Head-Up-Displays (HUDs) ausgestattet. Mit einem Projektor, typischerweise im Bereich des Armaturenbretts, werden Bilder auf die Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen.

HUD-Projektoren bestrahlen die Windschutzscheibe typischerweise mit einem Einstrahlwinkel von ungefähr 65°, was sich aus dem Einbauwinkel der Windschutzscheibe und der Positionierung des Projektors im Fahrzeug ergibt. Dieser Einstrahlwinkel liegt nahe dem Brewster-Winkel für einen Luft-Glas-Übergang (etwa 56,5° für Kalk-Natron-Glas). Gebräuchliche HUD-Projektoren senden s-polarisierte Strahlung aus, welche bei einem solchen Einstrahlwinkel wirksam von den Glasoberflächen reflektiert wird. Dabei tritt das Problem auf, dass das Projektorbild an beiden externen Oberflächen der Windschutzscheibe reflektiert wird. Dadurch tritt neben dem gewünschten Hauptbild auch ein leicht versetztes Nebenbild auf, das sogenannte Geisterbild ("Ghost"). Das Problem wird üblicherweise dadurch gemindert, dass die Oberflächen in einem Winkel zueinander eingeordnet werden, insbesondere durch Verwendung einer keilartigen Zwischenschicht zur Lamination der als Verbundscheibe ausgebildeten Windschutzscheiben, so dass Hauptbild und Geisterbild einander überlagert werden. Verbundgläser mit Keilfolien für HUDs sind beispielsweise aus WO2009/071135A1, EP1800855B1 oder EP1880243A2 bekannt.

Die Keilfolien sind kostspielig, so dass die Herstellung einer solchen Verbundscheibe für ein HUD recht kostenintensiv ist. Es besteht daher Bedarf an HUD-Projektionsanordnungen, die mit Windschutzscheiben ohne Keilfolien auskommen. So ist es beispielsweise möglich, den HUD-Projektor mit p-polarisierter Strahlung zu betreiben, welche an den Scheibenoberflächen nicht wesentlich reflektiert wird. Als Reflexionsfläche für die p-polarisierte Strahlung weist die Windschutzscheibe stattdessen eine Reflexionsbeschichtung auf, insbesondere mit metallischen und/oder dielektrischen Schichten. HUD-Projektionsanordnungen dieser Art sind beispielsweise aus DE102014220189A1, US2017242247A1, WO2019046157A1, WO2019179682A1 und WO2019179683A1 bekannt.

Die Reflexion von p-polarisierter Strahlung wird an Glasoberflächen aber nur vollständig unterdrückt, wenn der Einstrahlwinkel exakt dem Brewsterwinkel entspricht. Da der typische Einstrahlwinkel von etwa 65° zwar nahe dem Brewsterwinkel liegt, aber doch signifikant von ihm abweicht, resultiert eine gewisse Restreflexion der Projektorstrahlung an den Glasoberflächen. Während die Reflexion an der außenseitigen Oberfläche der Außenscheibe infolge der Strahlungsreflexion an der Reflexionsbeschichtung abgeschwächt wird, kann insbesondere die Reflexion an der innenraumseitigen Oberfläche der Innenscheibe als zwar schwaches, aber dennoch störendes Geisterbild in Erscheinung treten. Zudem bezieht sich der Einstrahlwinkel von 65° lediglich auf einen Punkt der Windschutzscheibe. Da der HUD-Projektor aber einen größeren HUD-Bereich auf der Windschutzscheibe bestrahlt, können lokal auch größere Einstrahlwinkel von beispielsweise bis zu 68° oder sogar bis zu 75° auftreten. Da dort die Abweichung zum Brewsterwinkel noch ausgeprägter ist, tritt das Geisterbild noch intensitätsstärker auf. Zudem ist eine Tendenz der Automobilhersteller zu beobachten, die Windschutzscheiben flacher einzubauen. Hierdurch wird der Einstrahlwinkel größer und damit auch die Abweichung vom Brewsterwinkel.

WO2019179682A1, WO2019179683A1, WO2019206493A1 und US20190064516A1 offenbaren Windschutzscheiben für HUD-Projektionsanordnungen, welche auf der innenraumseitigen Oberfläche mit einer Antireflexionsbeschichtung versehen sind, um die Reflektivität der innenraumseitigen Oberfläche zu reduzieren.

EP0844507A1 offenbart eine weitere HUD-Projektionsanordnung, wobei eine Windschutzscheibe mit p-polarisierter Strahlung bestrahlt wird. Um den Brewsterwinkel an den Einstrahlwinkel anzupassen und dadurch eine Restreflexion an der Scheibenoberfläche zu vermeiden, ist auf der innenraumseitigen Oberfläche der Innenscheibe eine optisch hochbrechende Beschichtung aufgebracht ("Brewster's angle regulating film"). Die Beschichtung ist aus Titanoxid ausgebildet und auf die Scheibenoberfläche aufgesputtert.

WO2021209201 A1 offenbart eine Projektionsanordnung für ein HUD mit einer Reflexionsschicht zwischen einer Außenscheibe und einer Innenscheibe einer Verbundscheibe sowie einer hochbrechenden Schicht, die auf einer vom Zwischenraum der Verbundscheibe abgewandten Oberfläche der Innenscheibe angeordnet ist. Die hochbrechende Schicht umfasst genau eine Schicht mit einem Brechungsindex von 1,9 oder höher. Die hochbrechende Schicht kann auch mehr als eine Schicht mit einem Brechungsindex von 1,9 oder höher aufweisen. Die Reflexionsschicht kann optional eine elektrisch leitfähige Schicht enthalten, welche in erster Linie die Reflexion von sichtbarem Licht erhöht.

US2017242247 A1 offenbart eine Projektionsanordnung für ein HUD mit einer Reflexionsbeschichtung, welche 2 metallische Schichten enthält.

US20180149867A1 offenbart eine Projektionsanordnung für ein HUD mit einer Windschutzscheibe, die eine keilförmige thermoplastische Zwischenschicht aufweist.

Die CN113071165A zeigt eine Projektionsanordnung mit einer Verbundscheibe, die bevorzugt eine keilförmige thermoplastischen Zwischenschicht und eine Reflexionsbeschichtung aufweist, wobei die Reflexionsbeschichtung mindestens 3 metallische Schichten aufweist. Die hohe Anzahl der metallischen Schichten ist erforderlich, um den Durchgang von IR-Strahlung durch die Verbundscheibe zu verringern.

Die Anforderungen im Automobilsektor an Beschichtungen in Fahrzeugscheiben, insbesondere Windschutzscheiben, wachsen zudem zunehmend an. Neben der Eignung hohe Anteile von p-polarisierter Strahlung ohne störende Nebenbilder reflektieren zu können, sollen die Beschichtungen auch möglichst weitere Funktionen erfüllen, beispielsweise die Beheizbarkeit der Fahrzeugscheibe ermöglichen oder zu einer Verringerung des Eintrags von Wärmestrahlung aus der äußeren Umgebung beitragen.

Der vorliegenden Erfindung liegt die Aufgabe zugrunde, eine verbesserte Projektionsanordnung bereitzustellen, wobei das Bild durch die Reflexion von überwiegend p-polarisierter Strahlung an einer Verbundscheibe erzeugt wird und wobei die Intensität der reflektierten p-polarisierten Strahlung verstärkt wird, ohne dass die Intensität von Doppelbildern zunimmt.

Die Aufgabe der vorliegenden Erfindung wird erfindungsgemäß durch eine Projektionsanordnung gemäß Anspruch 1 gelöst. Bevorzugte Ausführungen gehen aus den Unteransprüchen hervor.

Erfindungsgemäß ist eine Projektionsanordnung beschrieben, welche sich insbesondere für ein Head-Up-Display (HUD) eignet. Die Projektionsanordnung umfasst mindestens eine Verbundscheibe und einen Projektor. Die Verbundscheibe umfasst eine Außenscheibe und eine Innenscheibe, welche über eine thermoplastische Zwischenschicht miteinander verbunden sind. Eine Reflexionsschicht ist mindestens in einem Anzeigebereich der Verbundscheibe und zwischen der Außenscheibe und der Innenscheibe angeordnet. Eine reflexionssteigernde Beschichtung ist zumindest innerhalb des Anzeigebereiches auf einer, der thermoplastischen Zwischenschicht abgewandten, innenraumseitigen Oberfläche der Innenscheibe angeordnet. Die reflexionssteigernde Beschichtung verdeckt in Durchsicht durch die Verbundscheibe, in Blickrichtung von der Innenscheibe zur Außenscheibe, zumindest teilweise und bevorzugt vollständig die Reflexionsschicht und ist besonders bevorzugt deckungsgleich mit dieser angeordnet.

Die Strahlung des Projektors ist überwiegend p-polarisiert. Der Projektor ist auf den Anzeigebereich der Verbundscheibe gerichtet. Die innenraumseitige Oberfläche der Innenscheibe ist die dem Projektor nächstliegende Fläche der Verbundscheibe.

Die reflexionssteigernde Beschichtung umfasst dabei mindestens eine optisch hochbrechende Schicht mit einem Brechungsindex von größer oder gleich 1,9 und mindestens eine optisch niedrigbrechende Schicht mit einem Brechungsindex von kleiner oder gleich 1,6.

Die Reflexionsschicht ist geeignet, die p-polarisierte Strahlung des Projektors zu mindestens 5 % zu reflektieren. Die Reflexionsschicht umfasst zudem in dieser Reihenfolge eine erste dielektrische Schicht oder Schichtenfolge, eine erste elektrisch leitfähige Schicht auf Basis von Silber, eine zweite dielektrische Schicht oder Schichtenfolge, eine zweite elektrisch leitfähige Schicht auf Basis von Silber und eine dritte dielektrische Schicht oder Schichtenfolge. Die Reflexionsschicht umfasst erfindungsgemäß nicht mehr als zwei elektrisch leitfähige Schichten auf Basis von Silber.

Die Außenscheibe weist eine von der thermoplastischen Zwischenschicht abgewandte außenseitige Oberfläche auf, welche auch gleichzeitig die Außenfläche der Verbundscheibe ist. Die Außenscheibe weist außerdem eine der thermoplastischen Zwischenschicht zugewandte innenraumseitige Oberfläche auf. Die innenraumseitige Oberfläche der Innenscheibe ist zugleich die Innenfläche der Verbundscheibe. Die Innenscheibe weist zudem eine der thermoplastischen Zwischenschicht zugewandte außenseitige Oberfläche auf. Die Verbundscheibe ist dafür vorgesehen, eine äußere Umgebung von einem Innenraum, vorzugsweise einen Fahrzeuginnenraum, abzutrennen. Die außenseitige Oberfläche der Außenscheibe ist dabei dafür vorgesehen, der äußeren Umgebung zugewandt zu sein und die innenraumseitige Oberfläche der Innenscheibe ist dafür vorgesehen, dem Innenraum zugewandt zu sein.

Die Verbundscheibe weist eine umlaufende Kante auf, welche besonders bevorzugt eine Oberkante und eine Unterkante sowie zwei dazwischen verlaufende Seitenkanten mit einer linken und einer rechten Seitenkante umfasst. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Die Oberkante wird häufig auch als Dachkante und die Unterkante als Motorkante bezeichnet.

Wie bei HUDs und auf einer ähnlichen Technologie basierenden Projektionsanordnungen üblich bestrahlt der Projektor, insbesondere mit einer p-polarisierten Strahlung im Wellenlängenbereich von 380 nm bis 780 nm, den Anzeigebereich, also eine Projektionsfläche, der Verbundscheibe. Die p-polarisierte Strahlung wird im Anzeigebereich in Richtung eines Betrachters reflektiert, wodurch ein virtuelles Bild erzeugt wird, welches der Betrachter von ihm ausgesehen hinter der Verbundscheibe wahrnimmt (Im Fall einer HUD). Die Strahlrichtung des Projektors kann typischerweise durch Spiegel variiert werden, insbesondere vertikal, um die Projektion an die Körpergröße des Betrachters anzupassen. Der Bereich, in dem sich die Augen des Betrachters bei gegebener Spiegelstellung befinden müssen, wird als Eyeboxfenster bezeichnet. Dieses Eyeboxfenster kann durch Verstellung der Spiegel vertikal verschoben werden, wobei der gesamte dadurch zugängliche Bereich (das heißt die Überlagerung aller möglichen Eyeboxfenster) als Eyebox bezeichnet wird. Ein innerhalb der Eyebox befindlicher Betrachter kann das virtuelle Bild wahrnehmen. Damit ist natürlich gemeint, dass sich die Augen des Betrachters innerhalb der Eyebox befinden müssen, nicht etwa der gesamte Körper.

Die p-polarisierte Strahlung wird hauptsächlich von der Reflexionsschicht reflektiert, die intensitätsstärkste Reflexion findet also an der Reflexionsschicht statt. Ein weiterer Anteil der p-polarisierten Strahlung wird an der reflexionssteigernden Beschichtung reflektiert. Die beiden Anteile der reflektierten p-polarisierten Strahlung, einmal durch die reflexionssteigernde Beschichtung und einmal durch die Reflexionsschicht, werden miteinander zumindest teilweise addiert, wodurch die Gesamtreflexion (addierten Anteile der p-polarisierten Strahlung für die Reflexionsschicht und die reflexionssteigernde Beschichtung) für den Betrachter innerhalb der Eyebox zunimmt. Das heißt die Intensität der an der Reflexionsschicht und der reflexionssteigernden Beschichtung reflektierten p-polarisierten Strahlung ist höher als die Intensität der an jeder anderen Grenzfläche reflektierten Strahlung, insbesondere höher als die Intensitäten der an der innenraumseitigen Oberfläche der Innenscheibe und der außenseitigen Oberfläche der Außenscheibe reflektierten p-polarisierten Strahlung.

Die Strahlung des Projektors ist zumindest mit einem Anteil von mehr als 50 % p-polarisiert, wobei der Anteil der p-polarisierten Strahlung bevorzugt mindestens 80% beträgt. Die Strahlung des Projektors ist besonders bevorzugt vollständig, also 100 %, oder nahezu vollständig p-polarisiert (im Wesentlichen rein p-polarisiert).

Die Angabe der Polarisationsrichtung bezieht sich dabei auf die Einfallsebene der Strahlung auf der Verbundscheibe. Mit p-polarisierter Strahlung wird eine Strahlung bezeichnet, deren elektrisches Feld in der Einfallsebene schwingt. Mit s-polarisierter Strahlung wird eine Strahlung bezeichnet, deren elektrisches Feld senkrecht zur Einfallsebene schwingt. Die Einfallsebene wird durch den Einfallsvektor und die Flächennormale der Verbundscheibe im geometrischen Zentrum des bestrahlten Bereichs aufgespannt.

Der Projektor ist vorzugsweise ein Liquid-crystal- (LCD-) Display, Thin-Film-Transistor- (TFT-) Display, Light-Emitting-Diode- (LED-) Display, Organic-Light-Emitting-Diode- (OLED-) Display, Electroluminescent- (EL-) Display oder microLED-Display.

Die hier verwendeten Fachbegriffe aus dem Bereich der HUDs sind dem Fachmann allgemein bekannt. Für eine ausführliche Darstellung sei auf die Dissertation "Simulationsbasierte Messtechnik zur Prüfung von Head-Up Displays" von Alexander Neumann am Institut für Informatik der Technischen Universität München (München: Universitätsbibliothek der TU München, 2012) verwiesen, insbesondere auf Kapitel 2 "Das Head-Up Display".

Weiterhin ist das reflektierte Bild auch für Träger von polarisationsselektiven Sonnenbrillen erkennbar, welche typischerweise nur p-polarisierte Strahlung passieren lassen und s-polarisierte Strahlung blocken. Die Reflexionsschicht bewirkt in Kombination mit der reflexionssteigernden Beschichtung eine hohe Reflektivität gegenüber p-polarisierter Strahlung, insbesondere im Spektralbereich von 380 nm bis 780 nm. Dadurch wird ein intensitätsstarkes HUD-Bild erreicht. Die erste und die zweite elektrisch leitfähige Schicht auf Basis von Silber sowie die reflexionssteigernde Beschichtung setzen die Lichttransmission nicht übermäßig herab, so dass die Verbundscheibe als Windschutzscheibe verwendet werden kann.

Die Außenscheibe und die Innenscheibe sind bevorzugt aus transparentem Glas gefertigt, insbesondere aus Kalk-Natron-Glas, was für Fensterscheiben üblich ist. Die Scheiben können grundsätzlich aber auch aus anderen Glasarten (beispielsweise Borosilikatglas, Quarzglas, Aluminosilikatglas) oder transparenten Kunststoffen (beispielsweise Polymethylmethacrylat oder Polycarbonat) gefertigt sein. Die Dicke der Außenscheibe und der Innenscheibe kann breit variieren. Vorzugsweise werden Scheiben mit einer Dicke im Bereich von 0,8 mm bis 5 mm, bevorzugt von 1,4 mm bis 2,5 mm verwendet, beispielsweise die mit den Standarddicken 1,6 mm oder 2,1 mm. Die Außenscheibe und die Innenscheiben können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein.

In einer besonderes bevorzugten Ausführungsform der Erfindung weist die Innenscheibe eine Dicke von kleiner 1,6 mm, besonders bevorzugt eine Dicke von kleiner oder gleich 1,4 mm und insbesondere eine Dicke von kleiner oder gleich 1,1 mm auf. Die Verringerung der Dicke der Innenscheibe geht mit einer Angleichung des Doppelbildes an das Primärbild einher. Das bedeutet, dass das unerwünschte Doppelbild, welches an der innenraumseitigen Oberfläche der Innenscheibe entsteht, näher an das Primärbild heranrückt (die Bilder überlappen stärker, wodurch der Eindruck eines Doppelbildes reduziert wird). Das Doppelbild liegt somit fast oder vollständig innerhalb des Primärbildes und wird nicht oder weniger stark störend empfunden als bei einer Innenscheibe mit einer größeren Dicke.

Die reflexionssteigernde Beschichtung umfasst erfindungsgemäß mindestens eine optisch niedrigbrechende Schicht mit einem Brechungsindex von kleiner oder gleich 1,6 und eine optisch hochbrechende Schicht mit einem Brechungsindex von größer oder gleich 1,9. Die reflexionssteigernde Schicht ist bevorzugt nur aus diesen beiden Schichten ausgebildet und weist keine weiteren Schichten unterhalb oder oberhalb einer der beiden Schichten auf. Eine optisch niedrigbrechende Schicht und eine optisch hochbrechende Schicht sind ausreichend, um den erfindungsgemäßen Effekt zu erzielen. Grundsätzlich kann die reflexionssteigernde Beschichtung aber auch weitere Schichten umfassen, was zur Optimierung bestimmter Parameter im Einzelfall gewünscht sein kann. Vorzugsweise umfassen die hochbrechende und die niedrigbrechende Schicht zusammen zwei oder mehr Schichten mit einem unterschiedlichen Brechungsindex. Der Brechungsindex ist hierbei für jede Schicht der hochbrechenden Schicht größer oder gleich 1,9 und für die niedrigbrechende Schicht kleiner oder gleich 1,6. Die reflexionssteigernde Beschichtung ist transparent mit einer mittleren Transmission von sichtbarem Licht (380 nm bis 780 nm) von vorzugsweise mindestens 80 % und insbesondere mindestens 85 %.

Die reflexionssteigernde Beschichtung erstreckt vorzugsweise über mindestens 30 %, besonders bevorzugt über mindestens 50 %, ganz besonders bevorzugt über mindestens 80 % und insbesondere über 100 % der innenraumseitigen Oberfläche der Innenscheibe.

Bevorzugt ist die optisch hochbrechende Schicht näher zu der innenraumseitigen Oberfläche der Innenscheibe angeordnet als die optisch niedrigbrechende Schicht. Die optisch hochbrechende Beschichtung ist dabei bevorzugt auf der innenraumseitigen Oberfläche der Innenscheibe und/oder einer auf der innenraumseitigen Oberfläche zuvor aufgebrachten Beschichtung oder Druck (beispielsweise eine Abdeckschicht) aufgebracht. Die optisch niedrigbrechende Schicht ist in diesem Fall folglich auf der optisch hochbrechenden Schicht aufgebracht.

Die hochbrechende Schicht weist einen Brechungsindex von mindestens 1,9 auf und bevorzugt mindestens 2,0. Die Erhöhung des Brechungsindexes führt eine hochbrechende Wirkung herbei. Die hochbrechende Schicht kann auch als reflexionssteigernde Schicht bezeichnet werden, da sie typischerweise die Gesamtreflexion der beschichteten Oberfläche erhöht. Die genannten Brechungsindizes führen zu besonders guten Ergebnissen. Der Brechungsindex beträgt bevorzugt höchstens 2,5 - eine weitere Erhöhung des Brechungsindexes würde keine weitere Verbesserung hinsichtlich der p-polarisierten Strahlung bringen, aber die Gesamtreflexion steigern.

Brechungsindizes sind im Rahmen der vorliegenden Erfindung grundsätzlich bezogen auf eine Wellenlänge von 550 nm angegeben. Methoden zur Bestimmung von Brechungsindizes sind dem Fachmann bekannt. Die im Rahmen der Erfindung angegebenen Brechungsindizes sind beispielsweise mittels Ellipsometrie bestimmbar, wobei kommerziell erhältliche Ellipsometer eingesetzt werden können. Die Angabe von Schichtdicken oder Dicken bezieht sich, sofern nicht anders angegeben, auf die geometrische Dicke einer Schicht.

Geeignete Materialien auf deren Basis die optisch hochbrechende Schicht ausgebildet sein kann, sind Siliziumnitrid (Si₃N₄), ein Silizium-Metall-Mischnitrid (beispielsweise Siliziumzirkoniumnitrid (SiZrN), Silizium-Aluminium-Mischnitrid, Silizium-Hafnium-Mischnitrid oder Silizium-Titan-Mischnitrid), Aluminiumnitrid, Zinnoxid, Wolframoxid, Nioboxid, Wismutoxid, Titanoxid, Zinn-Zink-Mischoxid, Indiumzinnoxid und Zirkoniumoxid. Darüber hinaus können auch Übergangsmetalloxide (wie Tantaloxid) oder Lanthanoidoxide (wie Lanthanoxid oder Ceroxid) eingesetzt werden. Es sind auch Mischungen dieser Materialien möglich. Die hochbrechende Schicht kann eine Dicke von 20 nm bis 150 nm, vorzugsweise eine geometrische Dicke von 40 nm bis 100 nm und insbesondere eine Dicke von 40 nm bis 70 nm aufweisen. Die hochbrechende Schicht ist insbesondere auf Basis von Siliziumnitrid, Indiumzinnoxid oder Silizium-Zirkonium-Mischnitrid mit einer bevorzugten geometrischen Dicke von 20 nm bis 150 nm ausgebildet. Bei diesen Materialien und insbesondere den beschriebenen Schichtdicken hat sich überraschend eine hohe reflexionssteigernde Wirkung gezeigt, ohne dass dabei die Intensität an Geisterbildern zunahm.

In einer bevorzugten Ausführungsform beträgt der Brechungsindex der optisch niedrigbrechenden Schicht höchstens 1,5 und besonders bevorzugt höchstens 1,4, beispielsweise 1,25 bis 1,35. Diese Werte haben sich als besonders vorteilhaft hinsichtlich der Reflexionseigenschaften der Verbundscheibe erwiesen.

Ist die reflexionssteigernde Beschichtung oder nur die niedrigbrechende Schicht mittels des Sol-Gel-Verfahrens auf einem Substrat (bspw. die innenraumseitige Oberfläche der Innenscheibe) aufgebracht, ist die niedrigbrechende Schicht bevorzugt auf Basis von nanoporösem Siliziumoxid ausgebildet. Die Reflexionseigenschaften der Schicht werden einerseits durch den Brechungsindex und andererseits durch die Dicke der niedrigbrechenden Schicht bestimmt. Der Brechungsindex hängt wiederum von der Porengröße und die Dichte der Poren ab. In einer bevorzugten Ausgestaltung sind die Poren derart abgemessen und verteilt, dass der Brechungsindex von 1,2 bis 1,4, besonders bevorzugt von 1,25 bis 1,35 beträgt. Ein Brechungsindex in diesen Bereichen ist besonders vorteilhaft um ein homogenes Reflexionsspektrum im Bereich von Einstrahlwinkeln um 65° sowie um 75° zu erreichen. Die Dicke der niedrigbrechenden Schicht beträgt bevorzugt von 30 nm bis 500 nm, besonders bevorzugt von 50 nm bis 150 nm. Damit werden gute Eigenschaften erreicht.

Das Siliziumoxid kann dotiert sein, beispielsweise mit Aluminium, Zirkonium, Titan, Bor. Durch Dotierungen können insbesondere die optischen, mechanischen und chemischen Eigenschaften der Beschichtung angepasst werden.

Die niedrigbrechende und oder die hochbrechende Schicht umfasst bevorzugt nur eine homogene Schicht. Es ist aber auch möglich, die niedrigbrechende Schicht aus mehreren Schichten von nanoporösem oder weitgehend nicht porösem Material (beispielsweise Schicht durch Sputtern oder chemische Gasphasenabscheidung) oder Mischungen davon auszubilden, die sich beispielsweise hinsichtlich der Porosität (Größe und/oder Dichte) unterscheiden. So kann gleichsam ein Verlauf von Brechungsindizes erzeugt werden.

Die Poren in einem nanoporösen Material, bevorzugt nanoporöses Siliziumoxid, sind insbesondere geschlossene Nanoporen, können aber auch offene Poren sein. Unter Nanoporen werden Poren verstanden, die Größen im Nanometerbereich aufweisen, also von 1 nm bis weniger als 1000 nm (1 µm). Die Poren weisen bevorzugt einen im Wesentlichen kreisförmigen Querschnitt auf (sphärische Poren), können aber auch andere Querschnitte aufweisen, beispielsweise einen elliptischen, ovalen oder elongierten Querschnitt (ellipsoide oder ovoide Poren). Bevorzugt weisen mindestens 80% aller Poren im Wesentlichen die gleiche Querschnittsform auf. Es kann vorteilhaft sein, wenn die Porengröße mindestens 20 nm oder sogar mindestens 40 nm beträgt. Die durchschnittliche Größe der Poren beträgt bevorzugt von 1 nm bis 500 nm, besonders bevorzugt von 1 nm bis 100 nm, ganz besonders bevorzugt von 20 nm bis 80 nm. Unter der Größe der Poren wird bei kreisförmigen Poren der Durchmesser verstanden, bei Poren anderer Gestalt die größte Längenausdehnung. Bevorzugt weisen mindestens 80% aller Poren Größen in den angegebenen Bereichen auf, besonders bevorzugt liegen die Größen sämtlicher Poren in den angegebenen Bereichen. Der Anteil an Porenvolumen am Gesamtvolumen liegt bevorzugt zwischen 10% und 90%, besonders bevorzugt unter 80%, ganz besonders bevorzugt kleiner als 60 %.

Ist von dünnen Schichten die Rede, also Schichten mit einer Dicke von unter 1000 nm, gilt: ist etwas "auf Basis" eines Materials ausgebildet, so besteht es mehrheitlich aus diesem Material, insbesondere im Wesentlichen aus diesem Material neben etwaigen Verunreinigungen oder Dotierungen. Die Angabe von Schichtdicken oder Dicken beziehen sich, sofern nicht anders angegeben, auf die geometrische Dicke einer Schicht.

Grundsätzlich kann eine solche reflexionssteigernde Beschichtung durch physikalische oder chemische Gasphasenabscheidung, also eine PVD- oder CVD-Beschichtung (PVD: *physical vapour deposition, CVD: chemical vapour deposition)* sein, oder beispielsweise mittels des Sol-Gel-Verfahrens aufgebracht werden. Solche Beschichtungen lassen sich mit besonders hoher optischer Qualität und mit besonders geringer Dicke erzeugen. Die niedrigbrechende und die hochbrechende Schicht werden in dieser Herstellungsvariante konsekutiv, also nacheinander, aufgebracht. Die Aufbringung von niedrigbrechenden oder hochbrechenden Schichten mittels des Sol-Gel-Verfahrens ist dem Fachmann bekannt und kann beispielsweise aus WO2021209201A1 entnommen werden.

Eine PVD-Beschichtung kann eine durch Kathodenzerstäubung aufgebrachte ("aufgesputterte") Beschichtung, insbesondere eine durch magnetfeldunterstütze Kathodenzerstäubung aufgebrachte (Magnetronsputtern) Beschichtung sein. Vorzugsweise wird die reflexionssteigernde Beschichtung durch Magnetronsputtern aufgebracht.

Wird die reflexionssteigernde Beschichtung mittels chemischer Gasphasenabscheidung aufgebracht, dann erfolgt dies vorzugsweise mittels plasmaunterstützter chemischer Gasphasenabscheidung (PECVD), insbesondere findet diese Herstellung bei atmosphärischem Druck statt (APCVD). Der Vorteil plasmagestützten chemischen Gasphasenabscheidung ist die Geschwindigkeit der Aufbringung bei gleichzeitiger hoher Homogenität der Schichten im Vergleich zu vielen anderen Verfahren. Im Besonderen Siliziumoxid lässt sich mittels dieser Herstellung homogen und effizient auf einem Substrat aufbringen.

Der Einfallswinkel der p-polarisierten Strahlung des Projektors ist der Winkel zwischen dem Einfallsvektor der Projektorstrahlung und der innenraumseitigen Flächennormale (also die Flächennormale auf die innenraumseitige externe Oberfläche der Verbundscheibe). Der Einfallswinkel der p-polarisierten Strahlung auf die Verbundscheibe wird bei typischen HUD-Anordnungen oder Projektionsanordnungen, die auf einer ähnlichen Technik basieren, mit 65° approximiert. Zur Ermittlung des Einfallswinkels wird üblicherweise das geometrische Zentrum des Anzeigebereichs, beispielsweise HUD-Bereichs, herangezogen. Da aber nicht ein einzelner Punkt, sondern eine Fläche (nämlich der Anzeigebereich) bestrahlt werden und zudem die Projektorstrahlung in gewissen Grenzen eingestellt werden kann (über Projektionselemente wie Linsen und Spiegeln), damit das HUD-Bild von Betrachtern unterschiedlicher Körpergröße wahrnehmbar ist, tritt in der Realität eine Verteilung von Einfallswinkeln im Anzeigebereich auf. Diese Verteilung von Einfallswinkeln muss bei der Konzeption der Projektionsanordnung zugrunde gelegt werden. Die auftretenden Einfallswinkel betragen typischerweise von 50° bis 75°, bevorzugt von 62° bis 68°. Die Werte beziehen sich auf den gesamten HUD-Bereich, so dass an keiner Stelle des HUD-Bereichs ein Einfallswinkel außerhalb der genannten Bereiche auftritt. Die p-polarisierte Strahlung des Projektors trifft vorzugsweise mit einem Einfallswinkel von 50° bis 75° auf die Verbundscheibe.

Die Reflexionsschicht ist ein Dünnschichtstapel, welcher also eine Schichtenfolge dünner Einzelschichten umfasst. Dieser Dünnschichtstapel umfasst erfindungsgemäß zumindest eine erste dielektrische Schicht oder Schichtenfolge, eine erste elektrisch leitfähige Schicht auf Basis von Silber, eine zweite dielektrische Schicht oder Schichtenfolge, eine zweite elektrisch leitfähige Schicht auf Basis von Silber und eine dritte dielektrische Schicht oder Schichtenfolge. Die erste und die zweite elektrisch leitfähige Schicht auf Basis von Silber verleihen der Reflexionsschicht die grundlegenden reflektierenden Eigenschaften und außerdem eine IR-reflektierende Wirkung und eine elektrische Leitfähigkeit. Die elektrisch leitfähigen Schichten auf Basis von Silber können auch vereinfacht als Silberschichten bezeichnet werden. Es ist ein besonderer Vorteil der vorliegenden Erfindung, dass mit zwei Silberschichten die gewünschten Reflexionseigenschaften erreicht werden können, ohne dass die Transmission von sichtbarem Licht durch die Verbundscheibe zu stark herabgesetzt würde, wie es bei der Verwendung von mehr als einer elektrisch leitfähigen Schicht meist der Fall wäre. Es können sogar weitere elektrisch leitfähige Schichten vorliegen (jedoch nicht auf Basis von Silber), die nicht wesentlich zur elektrischen Leitfähigkeit der Reflexionsschicht beitragen, sondern einen anderen Zweck erfüllen. Dies gilt insbesondere für metallische Blockerschichten mit geometrischen Dicken von weniger als 1 nm, die bevorzugt zwischen der ersten Silberschicht und der ersten dielektrischen Schicht oder Schichtenfolge und/oder der ersten Silberschicht und der zweiten dielektrischen Schicht oder Schichtenfolge und/oder die bevorzugt zwischen der zweiten Silberschicht und der zweiten dielektrischen Schicht oder Schichtenfolge und/oder der zweiten Silberschicht und der dritten dielektrischen Schicht oder Schichtenfolge angeordnet sind.

Die erste und/oder die zweite elektrisch leitfähige Schicht enthalten bevorzugt mindestens 90 Gew. % Silber, besonders bevorzugt mindestens 99 Gew. % Silber, ganz besonders bevorzugt mindestens 99,9 Gew. % Silber. Die erst und/oder die zweite elektrisch leitfähige Schicht können Dotierungen aufweisen, beispielsweise Palladium, Gold, Kupfer oder Aluminium.

Die geometrische Schichtdicke der einzelnen Silberschichten beträgt bevorzugt höchstens 15 nm, besonders bevorzugt höchstens 14 nm, ganz besonders bevorzugt höchstens 13 nm. Dadurch kann eine vorteilhafte Reflektivität im IR-Bereich erreicht werden, ohne die Transmission zu stark herabzusetzen. Die geometrische Schichtdicke der einzelnen Silberschichten beträgt bevorzugt mindestens 6 nm, besonders bevorzugt mindestens 7 nm. Dünnere Silberschichten können zu einer Entnetzung des Schichtaufbaus führen. Besonders bevorzugt beträgt die jeweilige geometrische Schichtdicke der ersten und/oder zweiten elektrisch leitfähigen Schicht von 7 nm bis 14 nm oder von 8 nm bis 13 nm.

In einer vorteilhaften Ausgestaltung der Erfindung hat die erste elektrisch leitfähige Schicht eine größere geometrische Dicke als die zweite elektrisch leitfähige Schicht, vorzugsweise ist die erste elektrisch leitfähige Schicht mindestens 15 %, besonders bevorzugt mindestens 25% dicker als die zweite elektrisch leitfähige Schicht. Diese Dickenunterschiede ergeben einen verbesserten Reflexionsgrad mit einer überwiegend homogenen Reflexion über den sichtbaren Spektralbereich. Es wird ebenso die Möglichkeit gewahrt, die Reflexionsschicht als Heizschicht zu verwenden.

In einer vorteilhaften Ausgestaltung umfassen die erste und/oder die zweite und/oder die dritte dielektrische Schicht oder Schichtenfolge, keine Materialien deren Brechungsindex weniger als 1,9 beträgt. Alle dielektrischen Schichten oder Schichtfolgen der Reflexionsschicht weisen also einen Brechungsindex von mindestens 1,9 auf. Es ist ein besonderer Vorteil der vorliegenden Erfindung, dass die gewünschten Reflexionseigenschaften allein mit relativ hochbrechenden Materialien erreicht werden können. Da für niedrigbrechende Schichten mit einem Brechungsindex von kleiner als 1,9 insbesondere Siliziumoxid-Schichten in Frage kommen, die geringe Abscheidungsraten bei der magnetfeldunterstützten Kathodenabscheidung aufweisen, lässt sich die Reflexionsschicht so schnell und kostengünstig herstellen.

Gebräuchliche dielektrische Schichten der ersten, der zweiten und/oder der dritten dielektrischen Schicht oder Schichtenfolge sind beispielsweise:
- Entspiegelungsschichten, welche die Reflexion von sichtbarem Licht senken und somit die Transparenz der beschichteten Scheibe erhöhen, beispielsweise auf Basis von Siliziumnitrid, Titanoxid, Aluminiumnitrid, Zinnzinkoxid, Indiumzinnoxid oder Zinnoxid, mit Schichtdicken von beispielsweise 10 nm bis 100 nm;
- brechungsindexsteigernde Schichten, die einen höheren Brechungsindex aufweisen als die Entspiegelungsschicht, beispielsweise auf Basis von Silizium-Metall-Mischnitriden wie Siliziumzirkonium-Mischnitrid, mit Schichtdicken von beispielsweise 10 nm bis 100 nm;
- Anpassungsschichten, welche die Kristallinität und damit die Reflektivität der elektrisch leitfähigen Schicht verbessern, beispielsweise auf Basis von Zinkoxid (ZnO), mit Schichtdicken von beispielsweise 3 nm bis 20 nm.

Die brechungsindexsteigernden Schichten sind bevorzugt zwischen Entspiegelungsschichten und der ersten und/oder zweiten elektrisch leitfähigen Schicht angeordnet beziehungsweise zwischen der Anpassungsschicht (soweit vorhanden) und der Entspiegelungsschicht.

Weitere Materialien von dielektrischen Schichten und Schichtenfolgen sind dem Fachmann allgemein bekannt und zum Beispiel aus WO2021104800A1 bekannt.

Durch die erste und die zweite elektrisch leitfähige Schicht weist die Reflexionsschicht reflektierende Eigenschaften im sichtbaren Spektralbereich auf, die gegenüber p-polarisierter Strahlung auftreten. Durch eine geeignete Wahl der Schichtdicken, insbesondere der dielektrischen Schichtenfolge, kann die Reflexion gegenüber p-polarisierter Strahlung gezielt optimiert werden.

Die Reflexionsschicht kann wie bereits erwähnt neben den elektrisch leitfähigen Schichten und dielektrischen Schichten oder Schichtenfolgen auch Blockerschichten umfassen, welche die erste und die zweite elektrisch leitfähige Schicht vor Degeneration schützen. Blockerschichten sind typischerweise sehr dünne metallhaltige Schichten auf Basis von Niob, Titan, Nickel, Chrom und/oder Legierungen mit Schichtdicken von beispielsweise 0,1 nm bis 2 nm.

Die geometrische Dicke der ersten dielektrischen Schicht oder Schichtenfolge beträgt bevorzugt von 10 nm bis 200 nm, besonders bevorzugt von 20 nm bis 100 nm. Die geometrische Dicke der zweiten dielektrischen Schicht oder Schichtenfolge beträgt bevorzugt von 50 nm bis 300 nm, besonders bevorzugt von 70 nm bis 200 nm. Die geometrische Dicke der dritten dielektrischen Schicht oder Schichtenfolge beträgt bevorzugt von 10 nm bis 200 nm, besonders bevorzugt von 20 nm bis 100 nm. Damit werden gute Ergebnisse erzielt.

In einer besonders bevorzugten Ausführungsform der Erfindung umfasst die erste dielektrische Schichtenfolge in dieser Reihenfolge mindestens eine Siliziumnitrid-Schicht (Entspiegelungsschicht) und eine Zinkoxid-Schicht (Anpassungsschicht). Die zweite dielektrische Schichtenfolge umfasst mindestens eine Zinkoxid-Schicht (Anpassungsschicht), eine Siliziumnitrid-Schicht (Entspiegelungsschicht), eine Silizium-Mischnitrid-Schicht (brechungsindexsteigernde Schicht), eine weitere Siliziumnitrid-Schicht (Entspiegelungsschicht), eine weitere Silizium-Mischnitrid-Schicht (brechungsindexsteigernde Schicht) und eine weitere Zinkoxid-Schicht (Anpassungsschicht). Die dritte dielektrische Schichtenfolge umfasst mindestens eine Zinkoxid-Schicht (Anpassungsschicht) und eine Siliziumnitrid-Schicht (Entspiegelungsschicht).

Die dielektrischen Schichten oder Schichtenfolgen können auch durch andere Kombinationen von Anpassungsschichten, Entspiegelungsschichten, brechungsindexsteigernden Schichten aufgebaut sein. Im Folgenden sind verschiedene Ausgestaltungen der ersten, der zweiten und der dritten dielektrischen Schichten oder Schichtenfolge beschrieben. Die Blockerschichten sind hierbei optionale zusätzliche Schichten, die nicht zu den dielektrischen Schichten dazugehören.

In einer besonders bevorzugten Ausgestaltung der Erfindung ergibt sich die Schichtenfolge der Reflexionsschicht ausgehend vom Substrat (also derjenigen Oberfläche, auf die die dielektrischen Schichten und elektrisch leitfähigen Schichten der Reflexionsschicht abgeschieden sind):
- Entspiegelungsschicht - Anpassungsschicht - Blockerschicht - erste elektrisch leitfähige Schicht - Blockerschicht - Anpassungsschicht - Entspiegelungsschicht - brechungsindexsteigernde Schicht - Entspiegelungsschicht - brechungsindexsteigernde Schicht - Anpassungsschicht - Blockerschicht - zweite elektrisch leitfähige Schicht - Blockerschicht - Anpassungsschicht - Entspiegelungsschicht.

Die geometrische Dicke der Entspiegelungsschichten beträgt jeweils bevorzugt von 10 nm bis 40 nm. Die geometrische Dicke der Anpassungsschichten beträgt jeweils bevorzugt von 5 nm bis 12 nm. Die geometrische Dicke der Blockerschichten beträgt jeweils bevorzugt von 0,1 nm bis 1 nm. Die geometrische Dicke der brechungsindexsteigernden Schichten beträgt jeweils bevorzugt von 5 nm bis 20 nm. Die geometrische Dicke der ersten und der zweiten elektrisch leitfähigen Schicht beträgt jeweils bevorzugt von 6 nm bis 15 nm.

In einer weiteren bevorzugten Ausgestaltung weist die zweite dielektrische Schicht keine brechungsindexsteigernde Schicht auf, es ergibt sich daraus der folgende Schichtaufbau ausgehend vom Substrat:
- Entspiegelungsschicht - Anpassungsschicht - Blockerschicht - erste elektrisch leitfähige Schicht - Blockerschicht - Anpassungsschicht - Entspiegelungsschicht -Entspiegelungsschicht - Anpassungsschicht - Blockerschicht - zweite elektrisch leitfähige Schicht - Blockerschicht - Anpassungsschicht - Entspiegelungsschicht.

Die geometrische Dicke der Entspiegelungsschichten beträgt jeweils bevorzugt von 5 nm bis 60 nm. Die geometrische Dicke der Anpassungsschichten beträgt jeweils bevorzugt von 5 nm bis 12 nm. Die geometrische Dicke der Blockerschichten beträgt jeweils bevorzugt von 0,1 nm bis 1 nm. Die geometrische Dicke der ersten und der zweiten elektrisch leitfähigen Schicht beträgt jeweils bevorzugt von 6 nm bis 15 nm.

Zusätzlich ergeben sich die folgenden bevorzugten Schichtenfolgen für die Reflexionsschicht ausgehend vom Substrat:
- Entspiegelungsschicht- erste elektrisch leitfähige Schicht - Entspiegelungsschicht - zweite elektrisch leitfähige Schicht - Entspiegelungsschicht.
- Entspiegelungsschicht - Anpassungsschicht -erste elektrisch leitfähige Schicht - Anpassungsschicht - Entspiegelungsschicht - Entspiegelungsschicht - Anpassungsschicht - zweite elektrisch leitfähige Schicht - Anpassungsschicht - Entspiegelungsschicht.
- Entspiegelungsschicht- erste elektrisch leitfähige Schicht - Entspiegelungsschicht - brechungsindexsteigernde Schicht - Entspiegelungsschicht - brechungsindexsteigernde Schicht - zweite elektrisch leitfähige Schicht - Anpassungsschicht - Entspiegelungsschicht.
- Entspiegelungsschicht - Anpassungsschicht -erste elektrisch leitfähige Schicht -Anpassungsschicht - Entspiegelungsschicht - brechungsindexsteigernde Schicht - Entspiegelungsschicht - brechungsindexsteigernde Schicht - Anpassungsschicht -zweite elektrisch leitfähige Schicht - Anpassungsschicht - Entspiegelungsschicht.
- Entspiegelungsschicht - Blockerschicht - erste elektrisch leitfähige Schicht - Blockerschicht - Entspiegelungsschicht - brechungsindexsteigernde Schicht - Entspiegelungsschicht - brechungsindexsteigernde Schicht - Blockerschicht - zweite elektrisch leitfähige Schicht - Blockerschicht - Entspiegelungsschicht.
- Entspiegelungsschicht -Blockerschicht - erste elektrisch leitfähige Schicht - Blockerschicht - Entspiegelungsschicht - Entspiegelungsschicht - Blockerschicht - zweite elektrisch leitfähige Schicht - Blockerschicht - Entspiegelungsschicht.

Die Reflexionsschicht kann auf der innenraumseitigen Oberfläche der Außenscheibe oder der außenseitigen Oberfläche der Innenscheibe aufgebracht sein. Alternativ kann die Reflexionsschicht auch innerhalb der thermoplastischen Zwischenschicht angeordnet sein, beispielsweise aufgebracht auf einer Trägerfolie, die zwischen zwei thermoplastischen Verbundfolien angeordnet ist. Die Reflexionsschicht ist vorzugsweise beginnend mit der ersten dielektrischen Schicht oder Schichtenfolge auf einem Substrat (also beispielsweise einer Folie, der Innenscheibe oder der Außenscheibe) aufgebracht.

Besonders bevorzugt ist die Anordnung der Reflexionsschicht auf der außenseitigen Oberfläche der Innenscheibe, weil die Projektorstrahlung dann den geringstmöglichen Weg durch die Verbundscheibe zurücklegen muss, bis sie auf die Reflexionsschicht trifft. Das ist vorteilhaft im Hinblick auf die Qualität des reflektierten Bildes. Die Reflexionsschicht ist transparent, was im Sinne der Erfindung bedeutet, dass sie eine mittlere Transmission im sichtbaren Spektralbereich von mindestens 70 %, bevorzugt mindestens 75 % aufweist und dadurch die Durchsicht durch die Scheibe nicht wesentlich einschränkt.

Grundsätzlich ist es ausreichend, wenn der Anzeigebereich der Verbundscheibe mit der Reflexionsschicht versehen ist. Es können aber auch weitere Bereiche mit der Reflexionsschicht versehen sein und die Verbundscheibe kann im wesentlichen vollflächig mit der Reflexionsschicht versehen sein, was herstellungsbedingt bevorzugt sein kann. In einer Ausgestaltung der Erfindung sind mindestens 80% der Scheibenoberfläche mit der erfindungsgemäßen Reflexionsschicht versehen. Insbesondere ist die Reflexionsschicht vollflächig auf die Scheibenoberfläche aufgebracht mit Ausnahme eines umlaufenden Randbereichs und optional lokaler Bereich, die in Einbaulage in einem Fahrzeug als Kommunikations-, Sensor- oder Kamerafenster die Transmission von elektromagnetischer Strahlung durch die Verbundscheibe gewährleisten sollen und daher nicht mit der Reflexionsschicht versehen sind. Der umlaufende unbeschichtete Randbereich weist beispielsweise eine Breite von bis zu 20 cm auf. Er verhindert den direkten Kontakt der Reflexionsschicht zur umgebenden Atmosphäre, so dass die Reflexionsschicht im Innern der Verbundscheibe vor Korrosion und Beschädigung geschützt ist. Durch die Erstreckung der Reflexionsschicht auf 80% oder mehr der Fläche der Verbundscheibe ergeben sich die Möglichkeiten mehrere Projektionsanordnungen, beispielsweise HUDs, die unabhängig voneinander betrieben werden, zu verwenden. Außerdem kann durch die Erstreckung über mindestens 80% der Fläche der Verbundscheibe die Reflexionsschicht auch als IR-reflektierende Beschichtung oder Heizschicht verwendet werden.

Die Reflexionsschicht wird bevorzugt durch physikalische Gasphasenabscheidung (PVD) auf eine Scheibenoberfläche aufgebracht, besonders bevorzugt durch Kathodenzerstäubung ("Sputtern"), ganz besonders bevorzugt durch magnetfeldunterstütze Kathodenzerstäubung ("Magnetronsputtern"). Die Reflexionsschicht wird bevorzugt vor der Lamination aufgebracht. Statt die Reflexionsschicht auf eine Scheibenoberfläche aufzubringen, kann sie grundsätzlich auch auf einer Trägerfolie bereitgestellt werden, die in der Zwischenschicht angeordnet wird.

Die mit der Reflexionsschicht und der reflexionssteigernden Beschichtung versehene Verbundscheibe weist im Anzeigebereich bevorzugt im Spektralbereich von 380 nm bis 780 nm, besonders bevorzugt von 380 nm bis 680 nm, einen gemittelten Reflexionsgrad gegenüber p-polarisierter Strahlung von mindestens 10 % auf, besonders bevorzugt von mindestens 12 %. Damit wird ein hinreichend intensitätsstarkes Projektionsbild erzeugt. Hierbei wird der Reflexionsgrad gemessen mit einem Einfallswinkel von 65° zur innenraumseitigen Flächennormalen, was etwa der Bestrahlung durch übliche Projektoren entspricht. Der Spektralbereich von 380 nm bis 680 nm wurde zur Charakterisierung der Reflexionseigenschaften herangezogen, weil der optische Eindruck eines Betrachters in erster Linie durch diesen Spektralbereich geprägt wird. Außerdem deckt er die für die HUD-Darstellung relevanten Wellenlängen ab (RGB: 473 nm, 550 nm, 630 nm). Der hohe Reflexionsgrad bei einem vergleichsweise einfachen Schichtaufbau ist ein großer Vorteil der vorliegenden Erfindung. Besonders gute Ergebnisse werden erzielt, wenn der Reflexionsgrad im gesamten Spektralbereich von 380 nm bis 680 nm mindestens 12 % beträgt, sodass der Reflexionsgrad im angegeben Spektralbereich an keiner Stelle unter den angegebenen Werten liegt.

Der Reflexionsgrad beschreibt den Anteil der insgesamt eingestrahlten Strahlung, der reflektiert wird. Er wird in % angegeben (bezogen auf 100% eingestrahlte Strahlung) oder als einheitenlose Zahl von 0 bis 1 (normiert auf die eingestrahlte Strahlung). Aufgetragen in Abhängigkeit von der Wellenlänge bildet er das Reflexionsspektrum. Die Ausführungen zum Reflexionsgrad gegenüber p-polarisierter Strahlung beziehen sich im Rahmen der vorliegenden Erfindung auf den Reflexionsgrad gemessen mit einem Einfallswinkel von 65° zur innenraumseitigen Flächennormalen. Die Angaben zum Reflexionsgrad beziehungsweise zum Reflexionsspektrum beziehen sich auf eine Reflexionsmessung mit einer Lichtquelle, die im betrachteten Spektralbereich gleichmäßig abstrahlt mit einer normierten Strahlungsintensität von 100%.

Die oben genannten gewünschten Reflexionscharakteristika werden insbesondere durch die Wahl der Materialien und Dicken der ersten und der zweiten elektrisch leitfähigen Schicht sowie den Aufbau der ersten, der zweiten und der dritten dielektrischen Schicht oder Schichtenfolgen erreicht. Die Reflexionsschicht kann so geeignet eingestellt werden.

Vorzugsweise ist der Anzeigebereich innerhalb des Durchsichtbereiches der Verbundscheibe angeordnet, also einem Bereich der Scheibe, welcher bei der Verwendung der Verbundscheibe als Fahrzeugscheibe zur Durchsicht vorgesehen ist. Der Anzeigebereich befindet sich in diesem Fall in einem Bereich der Verbundscheibe welcher dafür vorgesehen ist, als Projektionsfläche für ein HUD genutzt zu werden. Die erfindungsgemäße Proejektionsanordnung ist also bevorzugt ein HUD oder Bestandteil eines HUD. Mit "vollständig innerhalb des Durchsichtbereiches angeordnet" ist gemeint, dass die orthonormale Projektion des Anzeigebereiches zur Ebene des Durchsichtbereiches vollständig innerhalb des Abdeckbereiches angeordnet ist.

Im Sinne der vorliegenden Erfindung bedeutet "transparent", dass die Gesamttransmission der Verbundscheibe den gesetzlichen Bestimmungen für Windschutzscheiben entspricht und für sichtbares Licht bevorzugt eine Durchlässigkeit (nach ISO 9050:2003) von mehr als 70 %, insbesondere mehr als 75 %, aufweist. Entsprechend bedeutet "opak" eine Lichttransmission von weniger als 15 %, bevorzugt weniger als 10 %, besonders bevorzugt weniger als 5 % und insbesondere weniger 0,1 %.

Die thermoplastische Zwischenschicht ist bevorzugt als mindestens eine thermoplastische Verbundfolie ausgebildet und ist auf Basis von Ethylenvinylacetat (EVA), Polyvinylbutyral (PVB) oder Polyurethan (PU) oder Gemische oder Copolymere oder Derivate davon, besonders bevorzugt auf Basis von Polyvinylbutyral (PVB) und zusätzlich dem Fachmann bekannte Additive wie beispielsweise Weichmacher ausgebildet. Bevorzugt enthält die thermoplastische Folie mindestens einen Weichmacher.

Die thermoplastische Zwischenschicht kann durch eine einzelne Folie ausgebildet sein oder auch durch mehr als eine Folie. Die thermoplastische Zwischenschicht kann durch eine oder mehrere übereinander angeordnete thermoplastische Folien ausgebildet werden, wobei die Dicke der thermoplastischen Zwischenschicht nach der Lamination des Schichtstapels bevorzugt von 0,25 mm bis 1 mm beträgt, typischerweise 0,38 mm oder 0,76 mm. Die thermoplastische Zwischenschicht kann auch aus einer Folie ausgebildet sein, die bereichsweise gefärbt und damit opak ist. Die Zwischenschicht kann auch aus mehr als einer Folie ausgebildet sein, wobei die mindestens zwei Folien sich über unterschiedliche Bereiche der Fläche der Verbundscheibe erstrecken.

Die thermoplastische Zwischenschicht kann auch eine funktionale thermoplastische Folie sein, insbesondere eine Folie mit akustisch dämpfenden Eigenschaften, eine Infrarotstrahlung reflektierende Folie, eine Infrarotstrahlung absorbierende Folie und/oder eine UV-Strahlung absorbierende Folie. So kann die thermoplastische Zwischenschicht beispielsweise auch eine Bandfilterfolie sein.

Die Außenscheibe, die Innenscheibe und die Verbundscheibe können eine beliebige dreidimensionale Form aufweisen. Vorzugsweise haben die Innenscheibe und die Außenscheibe keine Schattenzonen, so dass sie effizient durch Kathodenzerstäubung beschichtet werden können. Bevorzugt sind die Innenscheibe und Außenscheibe und somit auch die Verbundscheibe plan oder leicht oder stark in eine Richtung oder in mehrere Richtungen des Raumes gebogen

Ist etwas "auf Basis" eines polymerischen Materials ausgebildet, so besteht es mehrheitlich, also zu mindestens 50 %, vorzugsweise zu mindestens 60 % und insbesondere zu mindestens 70%, aus diesem Material. Es kann also noch weitere Materialien wie beispielsweise Stabilisatoren oder Weichmacher enthalten. Ferner erstreckt sich die Erfindung auch auf ein Verfahren zur Herstellung einer Projektionsanordnung. Das Verfahren umfasst:
(a) das Anordnen einer Außenscheibe, einer thermoplastischen Zwischenschicht, einer Reflexionsschicht, einer Innenscheibe und einer reflexionssteigernden Beschichtung zu einem Schichtstapel,
   wobei die thermoplastische Zwischenschicht zwischen der Außenscheibe und der Innenscheibe angeordnet wird und die Reflexionsschicht in einem Anzeigebereich des Schichtstapels und zwischen der Außenscheibe und der Innenscheibe angeordnet wird und die reflexionssteigernde Beschichtung zumindest innerhalb des Anzeigebereichs (D) auf, der von der thermoplastischen Zwischenschicht abgewandten, innenraumseitigen Oberfläche der Innenscheibe angeordnet wird,
   wobei die reflexionssteigernde Beschichtung mindestens eine optisch hochbrechende Schicht mit einem Brechungsindex von größer oder gleich 1,9 und mindestens eine optisch niedrigbrechende Schicht mit einem Brechungsindex von kleiner oder gleich 1,6 umfasst und die Reflexionsschicht in dieser Reihenfolge eine erste dielektrische Schicht oder Schichtenfolge, eine erste elektrisch leitfähige Schicht auf Basis von Silber, eine zweite dielektrische Schicht oder Schichtenfolge, eine zweite elektrisch leitfähige Schicht auf Basis von Silber und eine dritte dielektrische Schicht oder Schichtenfolge umfasst, wobei die Reflexionsschicht nicht mehr als zwei elektrisch leitfähige Schichten auf Basis von Silber umfasst.
(b) die Laminierung des Schichtstapels zu einer Verbundscheibe, wobei sich aus dem Anzeigebereich des Schichtstapels auch der Anzeigebereich der Verbundscheibe (1) ergibt,
(c) das Anordnen eines Projektors, dessen Strahlung überwiegend p-polarisiert ist, und der auf den Anzeigebereich gerichtet wird und wobei der Projektor so angeordnet wird, dass die innenraumseitige Oberfläche der Innenscheibe die dem Projektor nächstliegende Fläche der Verbundscheibe ist,
   wobei die Reflexionsschicht geeignet ist, die p-polarisierte Strahlung des Projektors zu mindestens 5 % zu reflektieren.

Die Erfindung umfasst außerdem die Verwendung einer erfindungsgemäßen Projektionsanordnung, wobei der Projektor auf den Anzeigebereich gerichtet wird und die überwiegend p-polarisierte Strahlung des Projektors von der Reflexionsschicht und der reflexionssteigernden Beschichtung, welche sich innerhalb des Anzeigebereiches befinden, reflektiert werden. Die vorstehend beschriebenen bevorzugten Ausgestaltungen gelten für die Verwendung entsprechend.

Weiterhin erstreckt sich die Erfindung auf die Verwendung der erfindungsgemäßen Projektionsanordnung in Fahrzeugen für den Verkehr auf dem Lande, in der Luft oder zu Wasser, insbesondere in Kraftfahrzeugen. Bevorzugt ist die Verwendung der Verbundscheibe als Fahrzeug-Windschutzscheibe.

Die verschiedenen Ausgestaltungen der Erfindung können einzeln oder in beliebigen Kombinationen realisiert sein. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne von dem in den Ansprüchen definierten Gegenstand abzuweichen.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Figur 1: eine Querschnittansicht einer bevorzugten Ausführungsform der erfindungsgemäßen Projektionsanordnung,
- Figur 2: eine Draufsicht auf die Verbundscheibe von Fig. 1,
- Figur 3: eine Querschnittansicht einer weiteren bevorzugten Ausführungsform der erfindungsgemäßen Projektionsanordnung,
- Figur 4: eine Draufsicht auf die Verbundscheibe von Fig. 3,
- Figuren 5-6: verschiedene Ausgestaltungen der erfindungsgemäßen Projektionsanordnung im Ausschnitt D entlang der Schnittlinie A-A' gemäß Figur 2,
- Figur 7: weitere Ausgestaltung der erfindungsgemäßen Projektionsanordnung im Ausschnitt E entlang der Schnittlinie B-B' gemäß Figur 4,
- Figur 8: einen Querschnitt durch eine Ausgestaltung der reflexionssteigernden Beschichtung auf einer Innenscheibe,
- Figur 9: einen Querschnitt durch eine Ausgestaltung der Reflexionsschicht auf einer Innenscheibe und
- Figur 10-12: Reflexionsspektren von Verbundscheiben gegenüber p-polarisierter Strahlung gemäß den Beispielen 1 bis 3 jeweils abgebildet mit einem Vergleichsbeispiel.

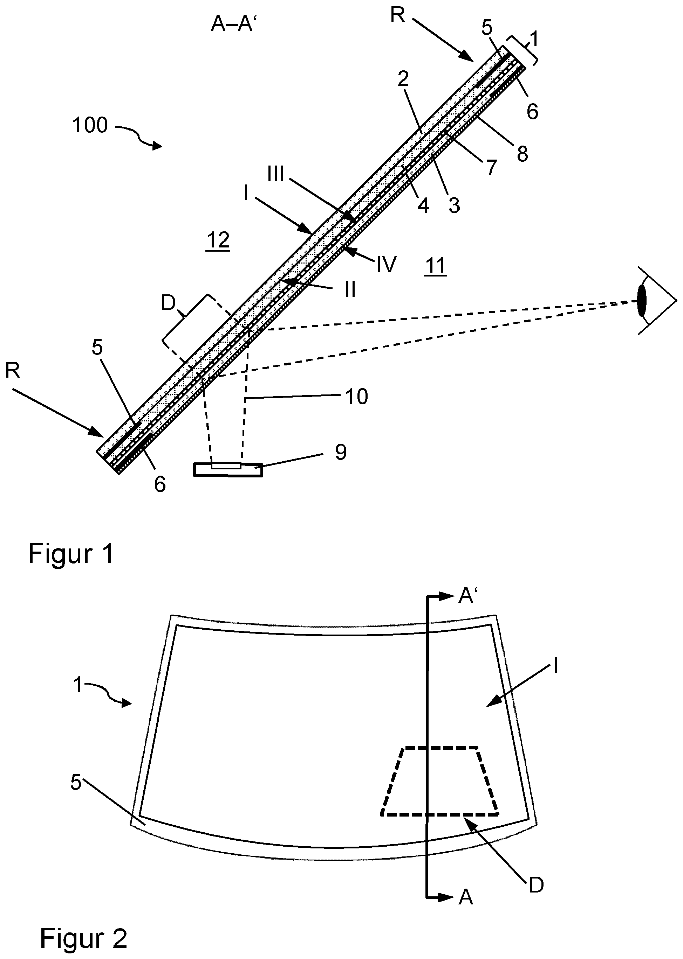

Figur 1 zeigt eine Querschnittansicht auf ein Ausführungsbeispiel der erfindungsgemäßen Projektionsanordnung 100 im Einbauzustand in einem Fahrzeug in Form einer schematischen Darstellung. Eine Draufsicht der Verbundscheibe 1 der Projektionsanordnung 100 aus Figur 1 ist in Figur 2 gezeigt. Die Querschnittansicht von Figur 1 entspricht der Schnittlinie A-A' der Verbundscheibe 1, wie in Figur 2 angedeutet.

Die Verbundscheibe 1 umfasst eine Außenscheibe 2 und eine Innenscheibe 3 mit einer thermoplastischen Zwischenschicht 4, welche zwischen der Außenscheibe 2 und der Innenscheibe 3 angeordnet ist. Die Verbundscheibe 1 ist in ein Fahrzeug eingebaut und trennt einen Innenraum 11 von einer äußeren Umgebung 12 ab. Beispielsweise ist die Verbundscheibe 1 die Windschutzscheibe eines Kraftfahrzeugs.

Die Außenscheibe 2 und die Innenscheibe 3 bestehen jeweils aus Glas, vorzugsweise thermisch vorgespanntem Kalk-Natron-Glas und sind für sichtbares Licht transparent. Die Innenscheibe 3 weist beispielsweise eine Dicke von 1,1 mm auf und ist damit deutlich dünner als üblicherweise eingesetzte Innenscheiben in Windschutzscheiben. Die Außenscheibe 2 weist beispielsweise eine Dicke von 2,1 mm auf. Die thermoplastische Zwischenschicht 4 umfasst einen thermoplastischen Kunststoff, vorzugsweise Polyvinylbutyral (PVB), Ethylenvinylacetat (EVA) und/oder Polyethylenterephthalat (PET).

Die außenseitige Oberfläche I der Außenscheibe 2 ist von der thermoplastischen Zwischenschicht 4 abgewandt und ist gleichzeitig die Außenfläche der Verbundscheibe 1. Die innenraumseitige Oberfläche II der Außenscheibe 2 sowie die außenseitige Oberfläche III der Innenscheibe 3 sind jeweils der Zwischenschicht 4 zugewandt. Die innenraumseitige Oberfläche IV der Innenscheibe 3 ist von der thermoplastischen Zwischenschicht 4 abgewandt und ist gleichzeitig die Innenseite der Verbundscheibe 1. Es versteht sich, dass die Verbundscheibe 1 jede beliebige geeignete geometrische Form und/oder Krümmung aufweisen kann. Als Windschutzscheibe weist sie typischer Weise eine konvexe Wölbung auf.

In einem umlaufenden Randabschnitt R der Verbundscheibe 1 befindet sich, auf der innenraumseitigen Oberfläche II der Außenscheibe 2, eine rahmenförmig umlaufende erste Abdeckschicht 5. Die erste Abdeckschicht 5 ist opak und verhindert die Sicht auf innenseitig der Verbundscheibe 1 angeordnete Strukturen. Weiterhin weist die Verbundscheibe 1 im Randabschnitt R auf der innenraumseitigen Oberfläche IV der Innenscheibe 3 eine zweite opake Abdeckschicht 6 auf, die rahmenförmig umlaufend ausgebildet ist. Die erste und die zweite opake Abdeckschicht 5, 6 bestehen aus einem herkömmlicherweise für Abdeckdrucke verwendeten, elektrisch nichtleitendem Material, beispielsweise einer schwarz eingefärbten Siebdruckfarbe, die eingebrannt ist. Die erste und die zweite opake Abdeckschicht 5, 6 verhindern die Durchsicht durch die Verbundscheibe 1, wodurch beispielsweise ein Klebestrang zum Einkleben der Verbundscheibe 1 in eine Fahrzeugkarosserie von der äußeren Umgebung 12 aus betrachtet nicht sichtbar ist.

Auf der innenraumseitigen Oberfläche IV der Innenscheibe 3 und auf dem zweiten Abdeckdruck 6 ist eine reflexionssteigernde Beschichtung 8 aufgebracht. Die reflexionssteigernde Beschichtung 8 erstreckt sich über die gesamte innenraumseitige Oberfläche IV der Innenscheibe 3. Die reflexionssteigernde Beschichtung 8 umfasst zumindest eine optisch hochbrechende Beschichtung 8.1 mit einem Brechungsindex größer oder gleich 1,9, beispielsweise Siliziumnitrid, und eine optisch niedrigbrechende Beschichtung 8.2 mit einem Brechungsindex kleiner oder gleich 1,6, beispielsweise Siliziumoxid.

Auf der außenseitigen Oberfläche III der Innenscheibe 3 ist eine Reflexionsschicht 7 aufgebracht. Die Reflexionsschicht 7 erstreckt sich über die gesamte außenseitige Oberfläche III der Innenscheibe 3. Die Reflexionsschicht 7 ist in Durchsicht durch die Verbundscheibe 1 (mit Blickrichtung ausgehend von Innenraum 11) in vollständiger Überdeckung bzw. deckungsgleich mit der reflexionssteigernden Beschichtung 8 angeordnet.

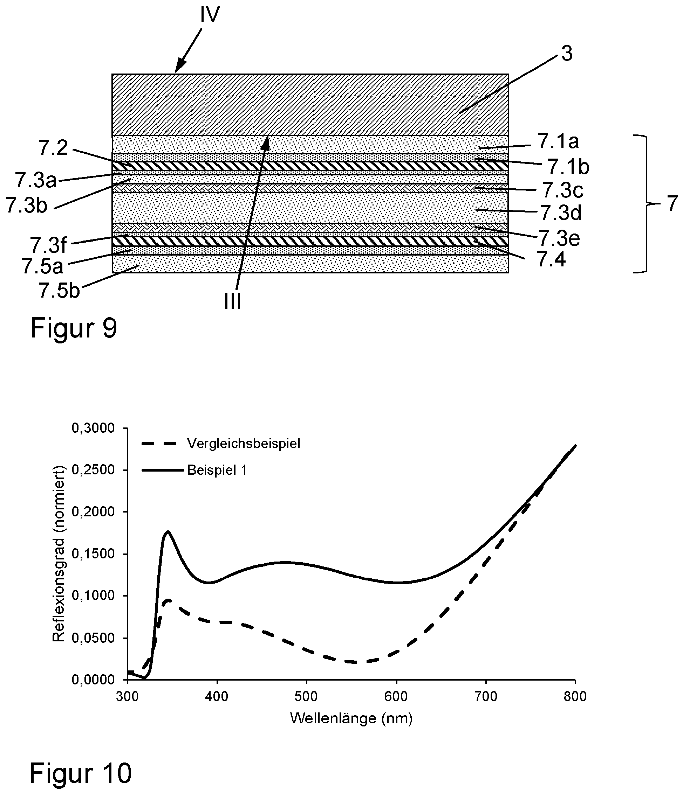

Die Reflexionsschicht 7 ist ein Schichtenstapel, der in dieser Reihenfolge zumindest eine erste dielektrische Schicht oder Schichtenfolge 7.1, eine erste elektrisch leitfähige Schicht 7.2 auf Basis von Silber, eine zweite dielektrische Schicht oder Schichtenfolge 7.3, eine zweite elektrisch leitfähige Schicht 7.4 auf Basis von Silber und eine dritte dielektrische Schicht oder Schichtenfolge 7.5 umfasst, wobei Details des Aufbaus eines solchen Schichtenstapels in Figur 9 gezeigt sind.

Die Projektionsanordnung 100 weist einen Projektor 9 als Bildgeber auf. Der Projektor 9 dient zur Erzeugung von p-polarisierter Strahlung 10 (Bildinformationen), die auf einen Anzeigebereich D gerichtet wird und durch die Reflexionsschicht 7 als reflektiertes Licht in den Innenraum 11 des Fahrzeugs reflektiert wird, wo es von einem Betrachter, in diesem Beispiel Fahrer, wahrgenommen werden kann. Der Anzeigebereich D ist der Bereich der Verbundscheibe 1, welcher üblicherweise als Head-Up-Display (HUD) verwendet wird. Die Reflexionsschicht 7 ist zur Reflexion der p-polarisierten Strahlung 10 des Projektors 9, d.h. eines Bildes gebildet durch die p-polarisierte Strahlung 10 des Projektors 9, geeignet ausgebildet. Die p-polarisierte Strahlung 10 trifft bevorzugt mit einem Einfallswinkel von 50° bis 80°, insbesondere von 65° bis 75° auf die Verbundscheibe 1. Der Projektor 9 ist beispielsweise ein Display, vorliegend ein LCD-Display. Möglich wäre beispielsweise auch, dass es sich bei der Verbundscheibe 1 um eine Dachscheibe, Seiten- oder Heckscheibe handelt. Bei der p-polarisierten Strahlung 10 handelt es sich um Lichtwellen innerhalb des vom Menschen visuell wahrnehmbaren Wellenlängenbereiches von 380 nm bis 780 nm.

Aufgrund der reflexionssteigernden Beschichtung 8, welche vor der Reflexionsschicht 7 angeordnet ist (also näher zum Innenraum als die Reflexionsschicht 7), kann die relative Strahlungsintensität der Nebenbilder, sogenannte Geisterbilder, im Vergleich zur Intensität der Gesamtreflexion reduziert werden, wohingegen die Intensität der Gesamtreflexion der p-polarisierten Strahlung 10 gesteigert wird. Die Verwendung einer besonders dünnen Innenscheibe 3 im Vergleich zu üblicherweise eingesetzten Innenscheiben mit Dicken von 1,6 mm oder größer reduziert ebenfalls die Entstehung von Geisterbildern, welche üblicherweise auf der innenraumseitigen Oberfläche IV der Innenscheibe 3 auftreten. Die Reflexionsschicht 7 mit zwei elektrisch leitfähigen Schichten 7.2, 7.4 weist außerdem eine verbesserte Reflexionscharakteristik zu gattungsgemäßen Verbundscheiben mit Head-Up-Displays auf und eignet sich zusätzlich beispielsweise als elektrisch heizfähige Schicht oder IR- (Infrarotstrahlung-) reflektierende Schicht zur Verminderung der Transmission von Wärmestrahlung durch die Verbundscheibe 1.

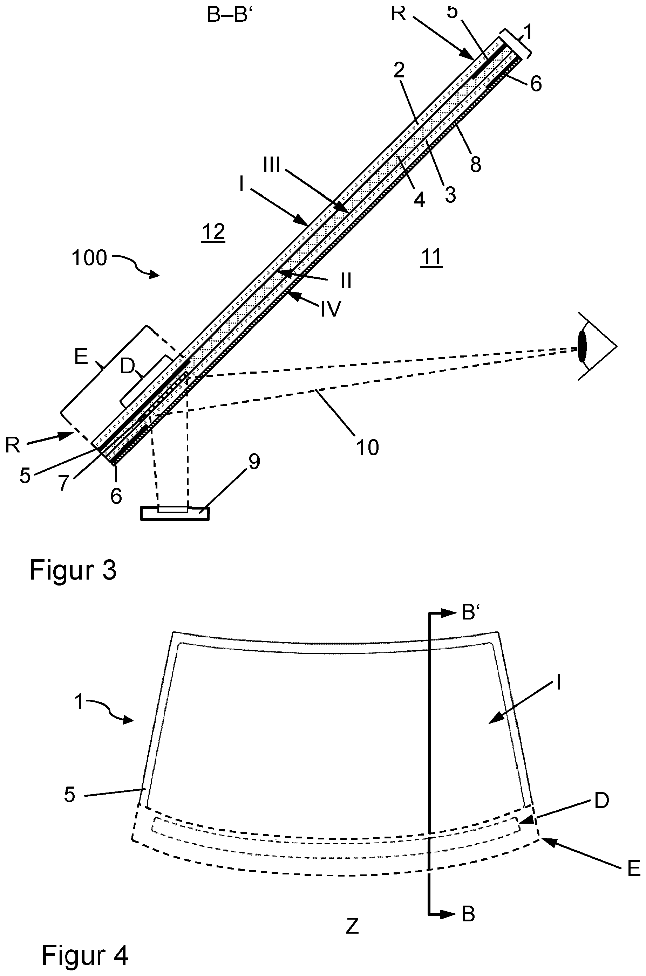

Die in der Figur 3 und der Figur 4 gezeigte Variante entspricht im Wesentlichen der Variante aus der Figur 1 und der Figur 2, sodass hier nur auf die Unterschiede eingegangen wird und ansonsten auf die Beschreibung zu der Figur 1 und der Figur 2 verwiesen wird.

Die erste Abdeckschicht 5 ist entlang eines Kantenabschnitts der Verbundscheibe 1, dem Abdeckbereich E, verbreitert, wobei der Abdeckbereich E im Einbauzustand der Scheibe als Windschutzscheibe in einem Kraftfahrzeug an die Motorkante unmittelbar angrenzt.

Die Reflexionsschicht 7 erstreckt sich anders als in Figur 1 und 2 nicht über die gesamte außenseitige Oberfläche III der Innenscheibe 3, sondern nur über den Anzeigebereich D. Der Anzeigebereich D ist im gezeigten Ausführungsbeispiel innerhalb des Abdeckbereichs E angeordnet. Die Reflexionsschicht 7 wird also in Durchsicht durch Verbundscheibe 1, in Blickrichtung von der äußeren Umgebung 12 in den Innenraum 11, vollständig von der ersten Abdeckschicht 5 im Abdeckbereich E verdeckt. In Durchsicht durch die Verbundscheibe 1 ausgehend vom Innenraum 11 ist die Reflexionsschicht 7 also vor der ersten Abdeckschicht 5 angeordnet.

Aufgrund der Anordnung der Reflexionsschicht 7 vor der opaken ersten Abdeckschicht 5 resultiert eine gute Bilddarstellung mit hohem Kontrast. Die Reflexionsschicht 7 erscheint hell und das reflektierte Bild (p-polarisierte Strahlung 10) ist damit auch ausgezeichnet erkennbar. Dies ermöglicht in vorteilhafter Weise eine Reduktion der Leistung des Projektors 9 und somit einen verminderten Energieverbrauch und Wärmeerzeugung.

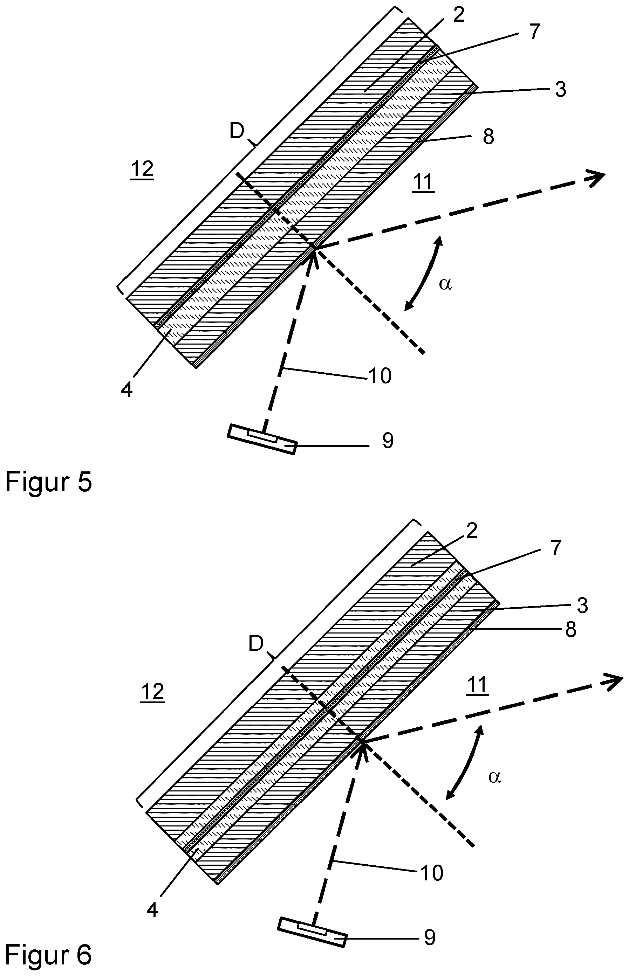

Es wird nun Bezug auf die Figuren 5 und 6 genommen, worin vergrößerte Querschnittansichten verschiedener Ausgestaltungen der Verbundscheibe 1 gezeigt sind. Die Querschnittansichten der Figuren 5 und 6 entsprechen der Schnittlinie A-A' im unteren Anzeigebereich D der Verbundscheibe 1, wie in Figur 2 angedeutet ist.

Die in Figur 5 gezeigte Ausführungsform der Verbundscheibe 1, entspricht im Wesentlichen der Verbundscheibe 1 gemäß Ausführungsform der Figur 1. Allerdings ist die Reflexionsschicht 7 in dieser Ausführungsform nicht auf der außenseitigen Oberfläche III der Innenscheibe 3 aufgebracht, sondern auf der innenraumseitigen Oberfläche II der Außenscheibe 2.

Der in Figur 5 gezeigte Winkel α zeigt den Einfallswinkel mit der die p-polarisierte Strahlung 10 auf die Verbundscheibe 1 trifft. Die p-polarisierte Strahlung 10 trifft bevorzugt mit einem Einfallswinkel von 50° bis 80°, insbesondere von 65° bis 75° auf die Verbundscheibe 1.

Die in Figur 6 gezeigte Ausführungsform der Verbundscheibe 1, entspricht im Wesentlichen der Verbundscheibe 1 gemäß Ausführungsform der Figur 1. Allerdings ist die Reflexionsschicht 7 in dieser Ausführungsform als eine beschichtete Folie ausgebildet, wobei die erste dielektrische Schicht oder Schichtenfolge 7.1, die erste elektrisch leitfähige Schicht 7.2 auf Basis von Silber, die zweite dielektrische Schicht oder Schichtenfolge 7.3, die zweite elektrisch leitfähige Schicht 7.4 auf Basis von Silber und die dritte dielektrische Schicht oder Schichtenfolge 7.5 auf einer Trägerfolie aufgebracht sind (Schichtenabfolge der Reflexionsschicht 7 in Figur 9 gezeigt). Die Trägerfolie ist beispielsweise auf Basis von Polyethylenterephthalat (PET) aufgebaut und weist eine Dicke von 100 µm auf. Die Reflexionsschicht 7 ist in diesem Ausführungsbeispiel innerhalb der thermoplastischen Zwischenschicht 4 angeordnet. Die Reflexionsschicht 7 wird hierzu beispielsweise mittels Druck in die thermoplastische Zwischenschicht 4 hineingedrückt (Beispielsweise während der Lamination der Scheibe).

Die mit den elektrisch leitfähigen Schichten 7.2, 7.4 und dielektrischen Schichten 7.1, 7.3, 7.5 beschichtete Fläche der Trägerfolie ist beispielsweise der außenseitigen Oberfläche III der Innenscheibe 3 zugewandt.

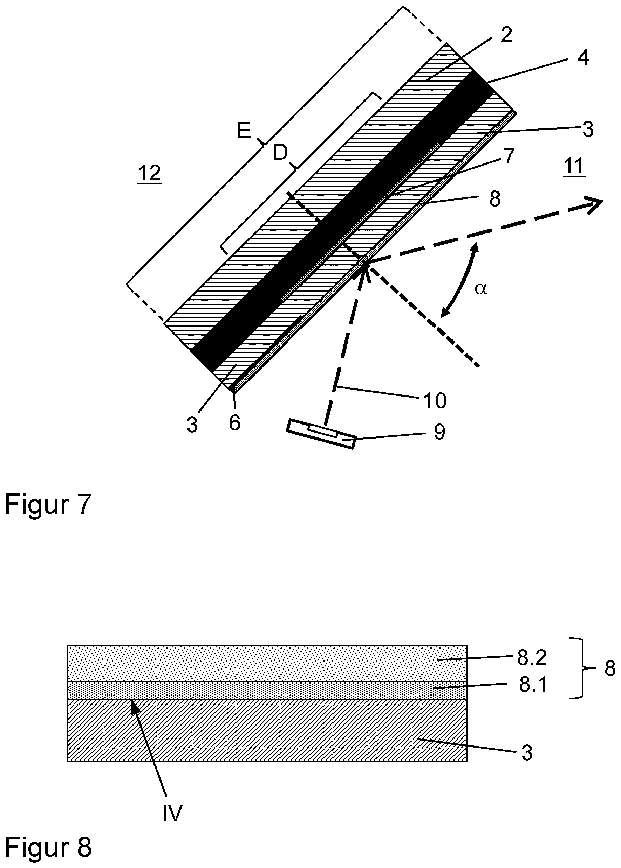

Es wird nun Bezug auf die Figur 7 genommen, worin eine vergrößerte Querschnittansicht einer weiteren Ausgestaltung der Verbundscheibe 1 gezeigt sind. Die Querschnittansicht der Figur 7 entspricht der Schnittlinie B-B' im unteren Abdeckbereich E der Verbundscheibe 1, wie in Figur 4 angedeutet ist.

Die in Figur 7 gezeigte Ausführungsform der Verbundscheibe 1, entspricht im Wesentlichen der Verbundscheibe 1 gemäß Ausführungsform der Figur 3. Allerdings ist in dieser Ausführungsform keine erste Abdeckschicht 5 auf der innenraumseitigen Oberfläche II der Außenscheibe 2 im Abdeckbereich E aufgebracht. Die thermoplastische Zwischenschicht 4 ist in dieser Ausführungsform innerhalb des Abdeckbereiches E schwarz gefärbt. Das bedeutet die thermoplastische Zwischenschicht 4 ist bereichsweise schwarz gefärbt und damit opak. Der gefärbte Bereich der thermoplastischen Zwischenschicht 4 begrenzt sich auf den Abdeckbereich E, sodass die Zwischenschicht 4 in den anderen Bereichen der Verbundscheibe 1 (hier nicht gezeigt) transparent ist.

Alternativ kann die thermoplastische Zwischenschicht 4 auch durch einer erste und eine zweite thermoplastische Verbundfolie ausgebildet sein, wobei die erste thermoplastische Verbundfolie transparent ist und sich über die gesamte Fläche der Verbundscheibe 1 erstreckt mit Ausnahme des Abdeckbereiches E. Die zweite thermoplastische Verbundfolie ist opak und beispielsweise schwarz gefärbt und erstreckt sich ausschließlich über den Abdeckbereich E der Verbundscheibe 1.

Die Reflexionsschicht 7 wird in Durchsicht durch die Verbundscheibe 1 ausgehend von der äußeren Umgebung 12 vollständig von der thermoplastischen Zwischenschicht 4 verdeckt. Wird vom Innenraum 11 durch die Verbundscheibe 1 geblickt, ist die Reflexionsschicht 7 also vor dem gefärbten Bereich der thermoplastischen Zwischenschicht 4 angeordnet. Dadurch entsteht bei der Bestrahlung der Reflexionsschicht 7 mit p-polarisiertem Licht 10 des Projektors 9 ein besonders kontrastreiches und visuell gut wahrnehmbares Projektorbild.

Figur 8 zeigt die Schichtenfolge einer Ausgestaltung der reflexionssteigernden Beschichtung 8, welche auf einer Innenscheibe 3 aufgebracht ist. Die reflexionssteigernde Beschichtung 8 ist ein Stapel von zwei dünnen Schichten. Die reflexionssteigernde Beschichtung 8 umfasst eine optisch hochbrechende Schicht 8.1 und eine optisch niedrigbrechende Schicht 8.2. Die optisch hochbrechende Schicht 8.1 und die optisch niedrigbrechende Schicht 8.2 sind deckungsgleich übereinander angeordnet, wobei die optisch hochbrechende Beschichtung 8.1 auf der innenraumseitigen Oberfläche IV der Innenscheibe 3 und die niedrigbrechende Schicht 8.2 auf der hochbrechenden Schicht 8.1 aufgebracht ist.

Die Aufbringung der reflexionssteigernden Beschichtung 8 mit den einzelnen Schichten erfolgt vorzugsweise mittels Magnetronsputtern.

Figur 9 zeigt die Schichtenfolge einer Ausgestaltung der Reflexionsschicht 7, welche auf einer Innenscheibe 3 aufgebracht ist. Die Reflexionsschicht 7 umfasst in dieser Reihenfolge eine erste dielektrische Schichtenfolge 7.1, eine erste elektrisch leitfähige Schicht 7.2 auf Basis von Silber, eine zweite dielektrische Schichtenfolge 7.3, eine zweite elektrisch leitfähige Schicht 7.4 auf Basis von Silber und eine dritte dielektrische Schichtenfolge 7.5.

Die erste dielektrische Schichtenfolge 7.1 besteht beispielsweise aus einer ersten Entspiegelungsschicht 7.1a, welche auf der außenseitigen Oberfläche III der Innenscheibe 3 aufgebracht ist, und aus einer auf der ersten Entspiegelungsschicht 7.1a aufgebrachten ersten Anpassungsschicht 7.1b. Die erste elektrisch leitfähige Schicht 7.2 ist auf der ersten Anpassungsschicht 7.1b angeordnet, wobei zwischen der ersten elektrisch leitfähigen Schicht 7.2 und der ersten Anpassungsschicht 7.1b eine 0,1 nm dicke Blockerschicht, beispielsweise aus einer Nickel-Chrom-Legierung, angeordnet ist (Blockerschicht hier nicht gezeigt). Die zweite dielektrische Schichtenfolge 7.3 besteht in dieser Reihenfolge aus einer zweiten Anpassungsschicht 7.3a, einer zweiten Entspiegelungsschicht 7.3b, einer ersten brechungsindexsteigernden Schicht 7.3c, einer dritten Entspiegelungsschicht 7.3d, einer zweiten brechungsindexsteigernden Schicht 7.3e und einer dritten Anpassungsschicht 7.3f. Die zweite Anpassungsschicht 7.3a ist dabei auf der ersten elektrisch leitfähigen Schicht 7.2 angeordnet, wobei zwischen den beiden Schichten 7.3a, 7.2 eine weitere 0,1 nm dicke Blockerschicht, beispielsweise aus einer Nickel-Chrom-Legierung, angeordnet ist (Blockerschicht hier nicht gezeigt). Die zweite elektrisch leitfähige Schicht 7.4 ist auf der dritten Anpassungsschicht 7.3f angeordnet, wobei zwischen der zweiten elektrisch leitfähigen Schicht 7.4 und der dritten Anpassungsschicht 7.3f eine 0,1 nm dicke Blockerschicht, beispielsweise aus einer Nickel-Chrom-Legierung, angeordnet ist (Blockerschicht hier nicht gezeigt). Die dritte dielektrische Schichtenfolge 7.3 besteht beispielsweise aus einer vierten Anpassungsschicht 7.5a und einer vierten Entspiegelungsschicht 7.5b. Die vierte Anpassungsschicht 7.5a ist dabei auf der zweiten elektrisch leitfähigen Schicht 7.4 angeordnet, wobei zwischen den beiden Schichten 7.5a, 7.4 eine weitere 0,1 nm dicke Blockerschicht, beispielsweise aus einer Nickel-Chrom-Legierung, angeordnet ist (Blockerschicht hier nicht gezeigt).

Der dargestellte Schichtaufbau in den Figuren 8 und 9 ist lediglich beispielhaft zu verstehen. So kann die reflexionssteigernde Beschichtung 8 auch mehr Schichten umfassen, solange mindestens eine optisch niedrigbrechende Schicht 8.2 und eine optisch hochbrechende Schicht 8.1 ist. Die Reflexionsschicht 7 kann mehr oder weniger Schichten als in Figur 9 gezeigt aufweisen, solange zumindest eine erste dielektrische Schicht oder Schichtenfolge 7.1, eine erste elektrisch leitfähige Schicht 7.2 auf Basis von Silber, eine zweite dielektrische Schicht oder Schichtenfolge 7.3, eine zweite elektrisch leitfähige Schicht 7.4 und eine dritte dielektrische Schicht oder Schichtenfolge 7.5 in dieser Reihenfolge enthalten sind.

Sowohl für die reflexionssteigernde Beschichtung 8 als auch für die Reflexionsschicht 7 gilt, dass die Schichtenfolgen nicht symmetrisch sein müssen. Beispielhafte Materialien und Schichtdicken können den nachfolgenden Beispielen entnommen werden.

Die Schichtenfolgen einer Verbundscheibe 1 mit der Reflexionsschicht 7 auf der außenseitigen Oberfläche III der Innenscheibe 3 und der reflexionssteigernden Beschichtung 8 auf der innenraumseitigen Oberfläche IV der Innenscheibe 3 gemäß der erfindungsgemäßen Beispiele 1 bis 4 sind, zusammen mit den Materialien und geometrische Schichtdicken der Einzelschichten, in Tabelle 1 dargestellt. Außerdem ist ein Vergleichsbeispiel einer gattungsgemäßen Verbundscheibe, die nicht die erfindungsgemäßen Merkmale erfüllt, in der Tabelle 1 dargestellt. Die dielektrischen Schichten können unabhängig voneinander dotiert sein, beispielsweise mit Bor oder Aluminium.

Die Beispiele und das Vergleichsbeispiel unterscheiden sich in erster Linie durch das vorhanden sein einer reflexionssteigernden Beschichtung 8, welche auf der innenraumseitigen Oberfläche IV der Innenscheibe 3 angeordnet ist. Aufgrund dieser reflexionssteigernden Beschichtung 8 ist es möglich, eine hohe Reflexion von p-polarisiertem Licht 10 zu erzielen, ohne das eine erste und eine zweite brechungsindexsteigernde Schicht 7.3c, 7.3e in der dritten dielektrischen Schichtenfolge 7.3 vorhanden sind.

**Tabelle 1:**

| Material | Bezugszeichen | | Schichtdicke | | | | |
|---|---|---|---|---|---|---|---|
| | | | Beispiel 1 | Beispiel 2 | Beispiel 3* | Beispiel 4 | Vergleichsbeispiel |
| SiO₂ | 8 | 8.2 | 120 nm | 125 nm | 150 nm | 110 nm | - |
| Si₃N₄ | | 8.1 | 60 nm | 65 nm | 40 nm | 60 nm | - |
| Kalk-Natron-Glas | 3 | | 1,6 mm | 1,6 mm | 1,6 mm | 1,6 mm | 2,1 mm |
| Si₃N₄ | | 7.1a | 20 nm | 25 nm | 30 nm | 40 nm | 9 nm |
| ZnO | | 7.1b | 10 nm | 10 nm | 10 nm | 10 nm | 10 nm |
| NiCr | | - | 0,1 nm | 0,1 nm | 0,1 nm | 0,1 nm | 0,1 nm |
| Ag | | 7.2 | 10,5 nm | 10, 5 nm | 9 nm | 10 nm | 7,9 nm |
| NiCr | | - | 0,1 nm | 0,1 nm | 0,1 nm | 0,1 nm | 0,1 nm |
| ZnO | | 7.3a | 5 nm | 5 nm | 5 nm | 5 nm | 5 nm |
| Si₃N₄ | | 7.3b | 10 nm | 10 nm | 10 nm | 10 nm | 10 nm |
| SiZr₁₇Nₓ | 7 | 7.3c | 9 nm | 9 nm | 9 nm | - | 9 nm |
| Si₃N₄ | | 7.3d | 35 nm | 40 nm | 40 nm | 45 nm | 30 nm |
| SiZr₁₇Nₓ | | 7.3e | 9 nm | 9 nm | 9 nm | - | 9 nm |
| ZnO | | 7.3f | 6 nm | 6 nm | 6 nm | 6 nm | 6 nm |
| NiCr | | - | 0,1 nm | 0,1 nm | 0,1 nm | 0,1 nm | 0,1 nm |
| Ag | | 7.4 | 7 nm | 7,5 nm | 7,5 nm | 7 nm | 9 nm |
| NiCr | | - | 0,1 nm | 0,1 nm | 0,1 nm | 0,1 nm | 0,1 nm |
| ZnO | | 7.5a | 10 nm | 10 nm | 10 nm | 10 nm | 10 nm |
| Si₃N₄ | | 7.5b | 20 nm | 20 nm | 35 nm | 20 nm | 19 nm |
| PVB | 4 | | 0,76 mm | 0,76 mm | 0,76 mm | 0,76 mm | 0,76 mm |
| Kalk-Natron-Glas | 2 | | 2,1 mm | 2,1 mm | 2,1 mm | 2,1 mm | 2,1 mm |

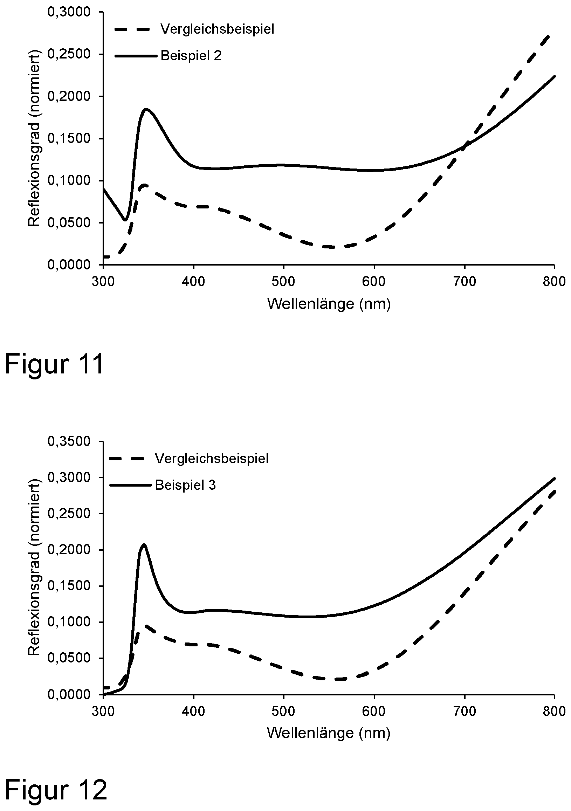

Die Tabelle 1 zeigt Schichtenfolgen der verschiedenen erfindungsgemäßen Beispiele 1 bis 4 einer Verbundscheibe 1 und die Schichtenfolge eines gattungsgemäßen Vergleichsbeispiels einer Verbundscheibe 1. Im Fall von Beispiel 3 (gekennzeichnet durch "*") handelt es sich bei der hochbrechenden Schicht 8.1 nicht um Si₃N₄, sondern um SiZr₁₇Nₓ. Die Figuren 10 bis 12 zeigen Reflexionsspektren von der Verbundscheibe 1 wie in Figur 1 gezeigt, jeweils mit einem Schichtaufbau gemäß der erfindungsgemäßen Beispiele 2 bis 4 sowie gemäß dem Vergleichsbeispiel nach Tabelle 1. Die Reflexionsspektren wurden simuliert, wobei die Simulation von einem Projektor 9, der im betrachteten Spektralbereich p-polarisierte Strahlung 10 gleichmäßiger Intensität ausstrahlt und die Innenscheibe 3 unter einem Einstrahlwinkel zur innenraumseitigen Flächennormalen von 65° bestrahlt (die sogenannte innenraumseitige Reflexion), ausgeht. Die Reflexionssimulierung ist also der Situation in der Projektionsanordnung 100 aus Figur 1 angenähert. Der besseren Übersichtlichkeit halber ist jeweils ein Beispiel mit dem Vergleichsbeispiel zusammengefasst.

Die Figuren 10 bis 12 zeigen, dass die erfindungsgemäßen Beispiele mit der reflexionssteigernden Beschichtung 8 zu einem wesentlich glatteren Spektrum im interessierenden Spektralbereich von 380 nm bis 780 nm führen. Auch der Reflexionsgrad von p-polarisiertem Licht 10 ist über den gesamten Wellenlängenbereich von 380 nm bis 780 nm für die Beispiele 2 und 4 größer als für das Vergleichsbeispiel. Im Fall von Beispiel 3 ist der Reflexionsgrad über den bedeutenderen Abschnitt im Wellenlängenbereich 400 nm bis 680 nm größer. Dadurch wird die visuelle Wahrnehmung für einen Betrachter deutlich verbessert. In Beispiel 4 zeigt sich, dass auch ohne die erste und zweite brechungsindexsteigernde Schicht 7.3c, 7.3e ein höherer Reflexionsgrad über den Spektralbereich von 380 nm bis 780 nm erreicht wird als für das Vergleichsbeispiel.

Der gemittelte Reflexionsgrad gegenüber p-polarisierter Strahlung 10, der Transmissionsgrad der Verbundscheibe 1 für sichtbares Licht (380 nm bis 780 nm) und die totale solare Energietransmission (TTS) sind für die erfindungsgemäßen Beispiele 1 bis 4 und für das Vergleichsbeispiel in Tabelle 2 angegeben.

**Tabelle 2:**

| | Reflexionsgrad | Transmissionsgrad (TL) | Totale solare Energietransmission (TTS) |
|---|---|---|---|
| Beispiel 2 | 14,7 % | 71,4 % | 51,1 % |
| Beispiel 3 | 13,1 % | 71 % | 53 % |
| Beispiel 4 | 15 % | 73,5 % | 51,3 % |
| Vergleichsbeispiel | 8,6 % | 73,1 % | 51,6 % |

In der Tabelle sind die erfindungsgemäßen Beispiele und das Vergleichsbeispiel einer Verbundscheibe 1 mit ihren zugehörigen gemessenen Reflexionsgraden, Transmissionsgraden und TTS-Werten. Wie in Tabelle 2 dargestellt, führt die Einführung einer reflexionssteigernden Beschichtung 8 auf der innenraumseitigen Oberfläche IV der Innenscheibe 3 in den Beispielen 1 bis 4 nur zu einer sehr geringen bis gar keiner Reduzierung des Transmissiongrades (TL) im sichtbaren Spektralbereich der Verbundscheibe 1 im Vergleich mit dem Vergleichsbeispiel. Gleichzeitig wird der Reflexionsgrad für p-polarisierte Strahlung 10 für die Beispiele 1 bis 3 deutlich erhöht um bis zu 74 % zu dem Vergleichsbeispiel. Im Beispiel 4 ist zwar eine marginale Verringerung des Reflexionsgrades zu beobachten, die Reflexionsschicht 7 weist allerdings auch keine erste und zweite brechungsindexsteigernde Schicht 7.3c, 7.3e auf. Die TTS-Werte bleiben auch für die erfindungsgemäßen Beispiele bei einem niedrigen Wert von kleiner 55 % wodurch ein angenehmes Raumklima in einem Innenraum 11 gewährleistet werden kann.

### Bezugszeichenliste

- 1: Verbundscheibe
- 2: Außenscheibe
- 3: Innenscheibe
- 4: thermoplastische Zwischenschicht
- 5: erste Abdeckschicht
- 6: zweite Abdecksicht
- 7: Reflexionsschicht
- 7.1: erste dielektrische Schicht oder Schichtenfolge
- 7.1a: erste Entspiegelungsschicht
- 7.1b: erste Anpassungsschicht
- 7.2: erste elektrisch leitfähige Schicht
- 7.3: zweite dielektrische Schicht oder Schichtenfolge
- 7.3a: zweite Anpassungsschicht
- 7.3b: zweite Entspiegelungsschicht
- 7.3c: erste brechungsindexsteigernde Schicht
- 7.3d: dritte Entspiegelungsschicht
- 7.3e: zweite brechungsindexsteigernde Schicht
- 7.3f: dritte Anpassungsschicht
- 7.4: zweite elektrisch leitfähige Schicht
- 7.5: dritte dielektrische Schicht oder Schichtenfolge
7.5a vierte Anpassungsschicht
7.5b vierte Entspiegelungsschicht
- 8: reflexionssteigernde Schicht
- 8.1: optisch hochbrechende Schicht
- 8.2: optisch niedrigbrechende Schicht
- 9: Projektor
- 10: p-polarisierte Strahlung
- 11: Innenraum
- 12: äußere Umgebung
- 100: Projektionsanordnung
- I: außenseitige Oberfläche der Außenscheibe 2
- II: innenraumseitige Oberfläche der Außenscheibe 2
- III: außenseitige Oberfläche der Innenscheibe 3
- IV: innenraumseitige Oberfläche der Innenscheibe 3
- R: Randabschnitt
- D: Anzeigebereich
- E: Abdeckbereich
- A-A': Querschnitt durch die Verbundscheibe 1 aus Figur 2
- B-B': Querschnitt durch die Verbundscheibe 1 aus Figur 4

## Patentansprüche

1. Projektionsanordnung (100), insbesondere für ein Head-Up-Display (HUD), mindestens umfassend
- eine Verbundscheibe (1), umfassend eine Außenscheibe (2) und eine Innenscheibe (3), die über eine thermoplastische Zwischenschicht (4) miteinander verbunden sind, eine Reflexionsschicht (7), welche in mindestens einem Anzeigebereich (D) der Verbundscheibe (1) zwischen der Außenscheibe (2) und der Innenscheibe (3) angeordnet ist, und eine reflexionssteigernde Beschichtung (8), welche zumindest innerhalb des Anzeigebereichs (D) auf einer, von der thermoplastischen Zwischenschicht (4) abgewandten, innenraumseitigen Oberfläche (IV) der Innenscheibe (3) angeordnet ist, und
- einen Projektor (9), dessen Strahlung (10) überwiegend p-polarisiert ist und der auf den Anzeigebereich (D) gerichtet ist und wobei die innenraumseitige Oberfläche (IV) der Innenscheibe (3) die dem Projektor (9) nächstliegende Fläche der Verbundscheibe (1) ist, wobei die reflexionssteigernde Beschichtung (8) mindestens eine optisch hochbrechende Schicht (8.1) mit einem Brechungsindex von größer oder gleich 1,9 und mindestens eine optisch niedrigbrechende Schicht (8.2) mit einem Brechungsindex von kleiner oder gleich 1,6 umfasst und
die Reflexionsschicht (7) geeignet ist, die p-polarisierte Strahlung (10) des Projektors (9) zu mindestens 5 % zu reflektieren und in dieser Reihenfolge eine erste dielektrische Schicht oder Schichtenfolge (7.1), eine erste elektrisch leitfähige Schicht (7.2) auf Basis von Silber, eine zweite dielektrische Schicht oder Schichtenfolge (7.3), eine zweite elektrisch leitfähige Schicht (7.4) auf Basis von Silber und eine dritte dielektrische Schicht oder Schichtenfolge (7.5) umfasst, wobei die Reflexionsschicht nicht mehr als zwei elektrisch leitfähige Schichten auf Basis von Silber (7.2, 7.4) umfasst.

2. Projektionsanordnung (100) gemäß Anspruch 1, bei welcher die Innenscheibe (3) eine Dicke von kleiner oder gleich 1,6 mm, bevorzugt kleiner oder gleich 1,4 mm und insbesondere kleiner oder gleich 1,1 mm aufweist.

3. Projektionsanordnung (100) gemäß Anspruch 1 oder 2, bei welcher die optisch hochbrechende Schicht (8.1) näher zu der innenraumseitigen Oberfläche (IV) der Innenscheibe (3) angeordnet ist als die optisch niedrigbrechende Schicht (8.2).

4. Projektionsanordnung (100) gemäß einem der Ansprüche 1 bis 3, bei welcher die optisch niedrigbrechende Schicht (8.2) auf Basis von Siliziumoxid oder dotiertem Siliziumoxid mit einer geometrischen Dicke von 30 nm bis 500 nm ausgebildet ist.

5. Projektionsanordnung (100) gemäß Anspruch 4, bei welcher die optisch niedrigbrechende Schicht (8.2) mittels eines Sol-Gel-Verfahrens aufgebracht ist, wobei die optisch niedrigbrechende Schicht auf Basis von nanoporösem Siliziumoxid ausgebildet ist.

6. Projektionsanordnung (100) gemäß einem der Ansprüche 1 bis 3, bei welcher die optisch hochbrechende Schicht (8.1) auf Basis von Siliziumnitrid, Indiumzinnoxid oder Silizium-Zirkonium-Mischnitrid mit einer geometrischen Dicke von 20 nm bis 150 nm ausgebildet ist.

7. Projektionsanordnung (100) gemäß einem der Ansprüche 1 bis 6, bei welcher die p-polarisierte Strahlung (10) des Projektors (9) mit einem Einfallswinkel von 50° bis 75° auf die Verbundscheibe (1) trifft.

8. Projektionsanordnung (100) gemäß einem der Ansprüche 1 bis 7, bei welcher die Reflexionsschicht (7) sich über mindestens 80 % der Fläche der Verbundscheibe (1) erstreckt.

9. Projektionsanordnung (100) gemäß einem der Ansprüche 1 bis 8, bei welcher die optisch niedrigbrechende Schicht (8.2) und/oder die optisch hochbrechende Schicht (8.1) nur eine homogene Schicht umfasst.

10. Projektionsanordnung (100) gemäß einem der Ansprüche 1 bis 8, bei welcher die optisch niedrigbrechende Schicht (8.2) aus einer oder mehreren Schichten von nanoporösem Material oder Mischungen davon ausgebildet ist, die sich in der Porosität unterscheiden.

11. Projektionsanordnung (100) gemäß einem der Ansprüche 1 bis 10, bei welcher der Anzeigebereich (D) sich in einem Durchsichtbereich der Verbundscheibe befindet, welcher dafür vorgesehen ist, als Projektionsfläche für ein HUD genutzt zu werden.

12. Projektionsanordnung (100) gemäß einem der Ansprüche 1 bis 11, bei welcher die erste dielektrische Schichtenfolge (7.1) in dieser Reihenfolge mindestens eine Siliziumnitrid-Schicht und eine Zinkoxid-Schicht umfasst,
die zweite dielektrische Schichtenfolge (7.3) in dieser Reihenfolge mindestens eine Zinkoxid-Schicht, eine Siliziumnitrid-Schicht, eine Silizium-Mischnitrid-Schicht, eine weitere Siliziumnitrid-Schicht, eine weitere Silizium-Mischnitrid-Schicht und eine weitere Zinkoxid-Schicht umfasst und
die dritte dielektrische Schichtenfolge (7.5) in dieser Reihenfolge mindestens eine Zinkoxid-Schicht und eine Siliziumnitrid-Schicht umfasst.

13. Verfahren zur Herstellung einer Projektionsanordnung (100) nach einem der Ansprüche 1 bis 12, umfassend:
(a) das Anordnen einer Außenscheibe (2), einer thermoplastischen Zwischenschicht (4), einer Reflexionsschicht (7), einer Innenscheibe (3) und einer reflexionssteigernden Beschichtung (8) zu einem Schichtstapel,
wobei die thermoplastische Zwischenschicht (4) zwischen der Außenscheibe (2) und der Innenscheibe (3) angeordnet wird und die Reflexionsschicht (7) in einem Anzeigebereich (D) des Schichtstapels zwischen der Außenscheibe (2) und der Innenscheibe (3) angeordnet wird und die reflexionssteigernde Beschichtung (8) zumindest innerhalb des Anzeigebereichs (D) auf einer, von der thermoplastischen Zwischenschicht (4) abgewandten, innenraumseitigen Oberfläche (IV) der Innenscheibe (3) angeordnet wird,
wobei die reflexionssteigernde Beschichtung (8) mindestens eine optisch hochbrechende Schicht (8.1) mit einem Brechungsindex von größer oder gleich 1,9 und mindestens eine optisch niedrigbrechende Schicht (8.2) mit einem Brechungsindex von kleiner oder gleich 1,6 umfasst und
die Reflexionsschicht (7) in dieser Reihenfolge eine erste dielektrische Schicht oder Schichtenfolge (7.1), eine erste elektrisch leitfähige Schicht (7.2) auf Basis von Silber, eine zweite dielektrische Schicht oder Schichtenfolge (7.3), eine zweite elektrisch leitfähige Schicht (7.4) auf Basis von Silber und eine dritte dielektrische Schicht oder Schichtenfolge (7.5) umfasst und wobei die Reflexionsschicht nicht mehr als zwei elektrisch leitfähige Schichten auf Basis von Silber (7.2, 7.4) umfasst.
(b) die Laminierung des Schichtstapels zu einer Verbundscheibe (1), wobei sich aus dem Anzeigebereich (D) des Schichtstapels auch der Anzeigebereich (D) der Verbundscheibe (1) ergibt,
(c) das Anordnen eines Projektors (9), dessen Strahlung (10) überwiegend p-polarisiert ist, und der auf den Anzeigebereich (D) gerichtet wird und wobei der Projektor (9) so angeordnet wird, dass die innenraumseitige Oberfläche (IV) der Innenscheibe (3) die dem Projektor (9) nächstliegende Fläche der Verbundscheibe (1) ist,
wobei die Reflexionsschicht (7) geeignet ist, die p-polarisierte Strahlung (10) des Projektors (9) zu mindestens 5 % zu reflektieren.

14. Verwendung einer Projektionsanordnung (100) gemäß einem der Ansprüche 1 bis 12 in Fahrzeugen für den Verkehr auf dem Lande, in der Luft oder zu Wasser, wobei die Verbundscheibe (1) bevorzugt eine Windschutzscheibe ist.

## Claims

1. A projection arrangement (100), in particular for a head-up display (HUD), at least comprising
- a laminated pane (1) comprising an outer pane (2) and an inner pane (3) which are connected to one another via a thermoplastic intermediate layer (4), a reflective layer (7) which is arranged between the outer pane (2) and the inner pane (3) in at least one display region (D) of the laminated pane (1), and a reflection-increasing coating (8) which is arranged at least within the display region (D) on an interior-side surface (IV) of the inner pane (3) facing away from the thermoplastic intermediate layer (4), and
- a projector (9) of which the radiation (10) is predominantly p-polarized and which is directed toward the display region (D) and wherein the interior-side surface (IV) of the inner pane (3) is the face of the laminated pane (1) closest to the projector (9),
wherein the reflection-increasing coating (8) comprises at least one optically high-refractive layer (8.1) having a refractive index of greater than or equal to 1.9 and at least one optically low-refractive layer (8.2) having a refractive index of less than or equal to 1.6, and
the reflective layer (7) is suitable for reflecting at least 5% of the p-polarized radiation (10) of the projector (9) and comprises, in this order, a first dielectric layer or layer sequence (7.1), a first electrically conductive layer (7.2) based on silver, a second dielectric layer or layer sequence (7.3), a second electrically conductive layer (7.4) based on silver and a third dielectric layer or layer sequence (7.5), wherein the reflective layer does not comprise more than two electrically conductive layers based on silver (7.2, 7.4).

2. The projection arrangement (100) according to claim 1, wherein the inner pane (3) has a thickness of less than or equal to 1.6 mm, preferably of less than or equal to 1.4 mm, and in particular of less than or equal to 1.1 mm.

3. The projection arrangement (100) according to claim 1 or 2, wherein the optically high-refractive layer (8.1) is arranged closer to the interior-side surface (IV) of the inner pane (3) than the optically low-refractive layer (8.2).

4. The projection arrangement (100) according to any of claims 1 to 3, wherein the optically low-refractive layer (8.2) is formed on the basis of silicon oxide or doped silicon oxide having a geometric thickness of from 30 nm to 500 nm.

5. The projection arrangement (100) according to claim 4, wherein the optically low-refractive layer (8.2) is applied by means of the sol-gel process, wherein the low-refractive layer is formed on the basis of nanoporous silicon oxide.

6. The projection arrangement (100) according to any of claims 1 to 3, wherein the optically high-refractive layer (8.1) is formed on the basis of silicon nitride, indium tin oxide, or silicon-zirconium mixed nitride having a geometric thickness of from 20 nm to 150 nm.

7. The projection arrangement (100) according to any of claims 1 to 6, wherein the p-polarized radiation (10) of the projector (9) impinges on the laminated pane (1) at an angle of incidence of from 50° to 75°.

8. The projection arrangement (100) according to any of claims 1 to 7, wherein the reflective layer (7) extends over at least 80% of the area of the laminated pane (1).

9. The projection arrangement (100) according to any of claims 1 to 8, wherein the low-refractive layer (8.2) and/or the high-refractive layer (8.1) comprise only one homogeneous layer.

10. The projection arrangement (100) according to any of claims 1 to 8, wherein the low-refractive layer (8.2) is formed from one or a plurality of layers of a nanoporous material or mixtures thereof, which differ in terms of porosity.

11. The projection arrangement (100) according to any of claims 1 to 10, wherein the display region (D) is located in a look-through region of the laminated pane, which region is intended to be used as a projection surface for an HUD.

12. The projection arrangement (100) according to any of claims 1 to 11, wherein the first dielectric layer sequence (7.1) in this order comprises at least one silicon nitride layer and a zinc oxide layer,
the second dielectric layer sequence (7.3) comprises, in this order, at least one zinc oxide layer, a silicon nitride layer, a silicon mixed nitride layer, a further silicon nitride layer, a further silicon mixed nitride layer and a further zinc oxide layer, and
the third dielectric layer sequence (7.5) comprises, in this order, at least one zinc oxide layer and one silicon nitride layer.

13. A method for producing a projection arrangement (100) according to any of claims 1 to 12, comprising:
(a) arranging an outer pane (2), a thermoplastic intermediate layer (4), a reflective layer (7), an inner pane (3) and a reflection-increasing coating (8) to form a layer stack,
wherein the thermoplastic intermediate layer (4) is arranged between the outer pane (2) and the inner pane (3), and the reflective layer (7) is arranged in a display region (D) of the layer stack between the outer pane (2) and the inner pane (3), and the reflection-increasing coating (8) is arranged at least within the display region (D) on an interior-side surface (IV) of the inner pane (3) facing away from the thermoplastic intermediate layer (4),
wherein the reflection-increasing coating (8) comprises at least one optically high-refractive layer (8.1) having a refractive index of greater than or equal to 1.9 and at least one optically low-refractive layer (8.2) having a refractive index of less than or equal to 1.6, and
the reflective layer (7) comprises, in this order, a first dielectric layer or layer sequence (7.1), a first electrically conductive layer (7.2) based on silver, a second dielectric layer or layer sequence (7.3), a second electrically conductive layer (7.4) based on silver and a third dielectric layer or layer sequence (7.5), and wherein the reflective layer does not comprise more than two electrically conductive layers based on silver (7.2, 7.4),
(b) laminating the layer stack to form a laminated pane (1), wherein the display region (D) of the laminated pane (1) also results from the display region (D) of the layer stack,
(c) arranging a projector (9), the radiation (10) of which is predominantly p-polarized, and which is directed toward the display region (D), and wherein the projector (9) is arranged such that the interior-side surface (IV) of the inner pane (3) is the face of the laminated pane (1) closest to the projector (9),
wherein the reflective layer (7) is suitable for reflecting at least 5% of the p-polarized radiation (10) of the projector (9).

14. Use of a projection arrangement (100) according to any of claims 1 to 12 in vehicles for traffic on land, in the air, or on water, wherein the laminated pane (1) is preferably a windshield.

## Revendications

1. Dispositif de projection (100), en particulier pour un affichage tête haute (HUD), comprenant au moins
- une vitre feuilletée (1) comprenant une vitre extérieure (2) et une vitre intérieure (3) qui sont reliées l'une à l'autre par une couche intermédiaire thermoplastique (4), une couche réfléchissante (7) qui est disposée entre la vitre extérieure (2) et la vitre intérieure (3) dans au moins une zone d'affichage (D) de la vitre feuilletée (1), et un revêtement augmentant la réflexion (8) qui est disposé au moins dans la zone d'affichage (D) sur une surface intérieure (IV) de la vitre intérieure (3) opposée à la couche intermédiaire thermoplastique (4), et
- un projecteur (9) dont le rayonnement (10) est principalement polarisé p et qui est dirigé vers la zone d'affichage (D), la surface intérieure (IV) de la vitre intérieure (3) étant la face de la vitre feuilletée (1) la plus proche du projecteur (9),
dans lequel le revêtement augmentant la réflexion (8) comprend au moins une couche à indice de réfraction élevé (8.1) ayant un indice de réfraction supérieur ou égal à 1,9 et au moins une couche à indice de réfraction optique faible (8.2) ayant un indice de réfraction inférieur ou égal à 1,6, et
la couche réfléchissante (7) est adaptée pour réfléchir le rayonnement polarisé p (10) du projecteur (9) à au moins 5 % et comprend, dans cet ordre, une première couche ou séquence de couches diélectriques (7.1), une première couche électriquement conductrice (7.2) à base d'argent, une deuxième couche ou séquence de couches diélectriques (7.3), une deuxième couche électriquement conductrice (7.4) à base d'argent et une troisième couche diélectrique ou séquence de couches (7.5), dans laquelle la couche réfléchissante ne comprend pas plus de deux couches électriquement conductrices à base d'argent (7.2, 7.4).

2. Dispositif de projection (100) selon la revendication 1, dans lequel la vitre intérieure (3) a une épaisseur inférieure ou égale à 1,6 mm, de préférence inférieure ou égale à 1,4 mm, et en particulier inférieure ou égale à 1,1 mm.

3. Dispositif de projection (100) selon la revendication 1 ou 2, dans lequel la couche à indice de réfraction élevé (8.1) est disposée plus près de la surface intérieure (IV) de la vitre intérieure (3) que la couche à indice de réfraction optique faible (8.2).

4. Dispositif de projection (100) selon l'une quelconque des revendications 1 à 3, dans lequel la couche à indice de réfraction optique faible (8.2) est formée à base d'oxyde de silicium ou d'oxyde de silicium dopé ayant une épaisseur géométrique comprise entre 30 nm et 500 nm.

5. Dispositif de projection (100) selon la revendication 4, dans lequel la couche à indice de réfraction optique faible (8.2) est appliquée au moyen du procédé sol-gel, dans lequel la couche à faible indice de réfraction est formée à base d'oxyde de silicium nanoporeux.

6. Dispositif de projection (100) selon l'une quelconque des revendications 1 à 3, dans lequel la couche à indice de réfraction élevé (8.1) est formée à base de nitrure de silicium, d'oxyde d'indium-étain ou de nitrure mixte de silicium-zirconium ayant une épaisseur géométrique comprise entre 20 nm et 150 nm.

7. Dispositif de projection (100) selon l'une quelconque des revendications 1 à 6, dans lequel le rayonnement polarisé p (10) du projecteur (9) frappe la vitre feuilletée (1) sous un angle d'incidence compris entre 50° et 75°.

8. Dispositif de projection (100) selon l'une quelconque des revendications 1 à 7, dans lequel la couche réfléchissante (7) s'étend sur au moins 80 % de la surface de la vitre feuilletée (1).

9. Dispositif de projection (100) selon l'une quelconque des revendications 1 à 8, dans lequel la couche à indice de réfraction optique faible (8.2) et/ou la couche à indice de réfraction élevé (8.1) ne comprennent qu'une seule couche homogène.

10. Dispositif de projection (100) selon l'une quelconque des revendications 1 à 8, dans lequel la couche à indice de réfraction optique faible (8.2) est formée d'une ou de plusieurs couches d'un matériau nanoporeux ou de mélanges de celui-ci, qui diffèrent en termes de porosité.

11. Dispositif de projection (100) selon l'une quelconque des revendications 1 à 10, dans lequel la zone d'affichage (D) est située dans une zone transparente de la vitre feuilletée, laquelle zone est destinée à être utilisée comme surface de projection pour un HUD.

12. Dispositif de projection (100) selon l'une quelconque des revendications 1 à 11, dans lequel la première séquence de couches diélectriques (7.1) comprend, dans cet ordre, au moins une couche de nitrure de silicium et une couche d'oxyde de zinc,
la deuxième séquence de couches diélectriques (7.3) comprend, dans cet ordre, au moins une couche d'oxyde de zinc, une couche de nitrure de silicium, une couche de nitrure mixte de silicium, une autre couche de nitrure de silicium, une autre couche de nitrure mixte de silicium et une autre couche d'oxyde de zinc, et
la troisième séquence de couches diélectriques (7.5) comprend, dans cet ordre, au moins une couche d'oxyde de zinc et une couche de nitrure de silicium.

13. Procédé de fabrication d'un dispositif de projection (100) selon l'une quelconque des revendications 1 à 12, comprenant:
(a) agencer une vitre extérieure (2), d'une couche intermédiaire thermoplastique (4), d'une couche réfléchissante (7), d'une vitre intérieure (3) et d'un revêtement augmentant la réflexion (8) pour former un empilement de couches,
dans lequel la couche intermédiaire thermoplastique (4) est disposée entre la vitre extérieure (2) et la vitre intérieure (3), et la couche réfléchissante (7) est disposée dans une zone d'affichage (D) de la pile de couches entre la vitre extérieure (2) et la vitre intérieure (3), et le revêtement augmentant la réflexion (8) est disposé au moins dans la zone d'affichage (D) sur une surface intérieure (IV) de la vitre intérieure (3) opposée à la couche intermédiaire thermoplastique (4),
dans lequel le revêtement augmentant la réflexion (8) comprend au moins une couche à indice de réfraction élevé (8.1) ayant un indice de réfraction supérieur ou égal à 1,9 et au moins une couche à indice de réfraction optique faible (8.2) ayant un indice de réfraction inférieur ou égal à 1,6, et
la couche réfléchissante (7) comprend, dans cet ordre, une première couche ou séquence de couches diélectriques (7.1), une première couche électriquement conductrice (7.2) à base d'argent, une deuxième couche diélectrique ou séquence de couches (7.3), une deuxième couche électriquement conductrice (7.4) à base d'argent et une troisième couche diélectrique ou séquence de couches (7.5), et dans lequel la couche réfléchissante ne comprend pas plus de deux couches électriquement conductrices à base d'argent (7.2, 7.4),
(b) stratifier l'empilement de couches pour former une vitre feuilletée (1), dans laquelle la zone d'affichage (D) de la vitre feuilletée (1) résulte également de la zone d'affichage (D) de l'empilement de couches,
(c) disposer un projecteur (9) dont le rayonnement (10) est principalement polarisé p et qui est dirigé vers la zone d'affichage (D), et dans lequel le projecteur (9) est disposé de telle sorte que la surface intérieure (IV) de la vitre intérieure (3) soit la face de la vitre feuilletée (1) la plus proche du projecteur (9),
dans lequel la couche réfléchissante (7) est adaptée pour réfléchir le rayonnement polarisé p (10) du projecteur (9) à au moins 5%.

14. Utilisation d'un dispositif de projection (100) selon l'une quelconque des revendications 1 à 12 dans des véhicules destinés à circuler sur terre, dans les airs ou sur l'eau, dans lequel la vitre feuilletée (1) est de préférence un pare-brise.
